# EUROPEAN PATENT APPLICATION

(11) **EP 4 539 585 A1**
(43) Date of publication of application: **16.04.2025**
(21) Application number: 23823081.7
(22) Date of filing: 12.06.2023
(51) Int. Cl.: H04W 76/10

(54) **CONNECTION CONTROL METHOD, APPARATUS AND SYSTEM**

(30) Priority: 13.06.2022 CN 202210665786
(71) Applicant: Huawei Technologies Co., Ltd., Shenzhen, Guangdong 518129 (CN)
(72) Inventor: DONG, Lei, Shenzhen, Guangdong 518129 (CN); TANG, Hao, Shenzhen, Guangdong 518129 (CN); ZHANG, Liqing, Shenzhen, Guangdong 518129 (CN)
(74) Representative: Maiwald GmbH
(86) International application number: PCT/CN2023/099700
(87) International publication number: WO 2023/241513

(57) **Abstract**

This application provides a connection control method, an apparatus, and a system, and is applied to the field of communication technologies. The connection control method provided in this application includes: A terminal device first sends a first request message to a first network device, where the first request message is used to request to establish a second connection to a second network device; the first request message includes first time information; and the first time information indicates an interruption time of a first connection established between the terminal device and the first network device. Then, the terminal device establishes a second connection to the second network device. Next, the terminal device transmits data through the second connection. In the method, the terminal device actively controls whether to establish a new connection to the second network device, so that signaling overheads and a delay can be reduced.

## Description

This application claims priority to Chinese Patent Application No. 202210665786.3, filed with the China National Intellectual Property Administration on June 13, 2022 and entitled "CONNECTION CONTROL METHOD, APPARATUS, AND SYSTEM", which is incorporated herein by reference in its entirety.

### TECHNICAL FIELD

This application relates to the field of communication technologies, and in particular, to a connection control method, an apparatus, and a system.

### BACKGROUND

How to ensure reliability of data transmission of a terminal device in a mobile scenario is an important topic of a new radio (new radio, NR) system. For example, scenarios such as ultra-reliable, low-latency communication (ultra-reliable, low-latency communication, URLLC), and vehicle to everything (vehicle to everything, V2X) have a very strong requirement for mobility.

In the mobile scenario, when the terminal device moves, a link between the terminal device and a blocked base station is interrupted due to various types of blocking, for example, a vehicle, a building, or a tree. To ensure continuous data transmission, a plurality of connections to different base stations may be configured for the terminal device at the same time. When one of the connections is interrupted, another connection may be used to continue to transmit data. This technology in which the terminal device needs to maintain at least two connections at the same time may be referred to as a multi-connectivity technology.

However, when the terminal device maintains the at least two connections at the same time, resource and power overheads are significantly increased. In addition, currently, the base station mainly controls, based on information reported by the terminal device, whether the terminal device maintains multi-connectivity. This causes extra signaling overheads and a delay. Therefore, how to reduce the delay and overheads of resources, signaling, and power without interrupting data transmission is an urgent problem to be resolved currently.

### SUMMARY

Embodiments of this application provide a connection control method, an apparatus, and a system, to resolve a problem of how to reduce a delay and overheads of resources, signaling, and power without interrupting data transmission.

To achieve the foregoing objectives, the following technical solutions are used in embodiments of this application.

According to a first aspect, a connection control method is provided. The method may be performed by a terminal device, or may be performed by a component (such as a processor, a chip, or a chip system) of the terminal device, or may be implemented through a logic module or software that can implement all or some functions of the terminal device. The method includes: sending a first request message to a first network device, where the first request message is used to request to establish a second connection to a second network device; the first request message includes first time information; and the first time information indicates an interruption time of a first connection established between the terminal device and the first network device; then establishing the second connection to the second network device; and transmitting data through the second connection.

According to the connection control method in this embodiment of this application, the terminal device can dynamically control, based on a connection status of the first connection, whether the second connection needs to be established. On the basis that data can be normally transmitted without being affected by interruption of the first connection, compared with an existing multi-connectivity solution, at least two connections do not need to be maintained by the terminal device for a long time, so that power consumption can be reduced. In addition, the terminal device actively controls connection establishment, so that signaling overheads and a delay can be reduced.

With reference to the first aspect, in a possible design, the first request message further includes a first time point, and the first time point is a moment, expected by the terminal device, at which establishment of the second connection is completed. Based on this solution, the first network device and the second network device may determine, based on the first time point, the moment, expected by the terminal device, at which establishment of the second connection is completed, to make an appropriate decision.

With reference to the first aspect, in a possible design, before the terminal device sends the first request message to the first network device, the method further includes: The terminal device determines a target first time-frequency resource from one or more preconfigured first time-frequency resources; and that a terminal device sends a first request message to a first network device includes: The terminal device sends the first request message to the first network device via the target first time-frequency resource. Based on this solution, a time-frequency resource used to send the first request message may be selected from a plurality of preconfigured time-frequency resources, thereby improving resource utilization and reducing power consumption.

With reference to the first aspect, in a possible design, that the terminal device determines a target first time-frequency resource from one or more preconfigured first time-frequency resources includes: The terminal device determines the target first time-frequency resource from the one or more preconfigured first time-frequency resources based on the first time point and/or a time required by the first network device to process the first request message, where the first time point is the moment, expected by the terminal device, at which establishment of the second connection is completed. Based on this solution, an appropriate time-frequency resource may be determined from the plurality of preconfigured first time-frequency resources based on the first time point and/or the time required by the first network device to process the first request message, to send the first request message.

With reference to the first aspect, in a possible design, before the terminal device establishes the second connection to the second network device, the method further includes: The terminal device receives a first confirmation message from the first network device, where the first confirmation message indicates that the second network device agrees to establish the second connection to the terminal device.

With reference to the first aspect, in a possible design, the method further includes: The terminal device releases the second connection when the first connection is restored; or the terminal device releases the second connection when a connection status of the second connection meets a first condition. Based on this solution, the terminal device may release the second connection based on the status of the first connection or the status of the second connection, thereby avoiding resource overheads required for maintaining the second connection.

With reference to the first aspect, in a possible design, before the terminal device releases the second connection, the method further includes: The terminal device sends a second request message to the second network device, where the second request message is used to request to release the second connection.

With reference to the first aspect, in a possible design, the second request message includes a fifth time point, and the fifth time point is a moment, expected by the terminal device, at which release of the second connection is completed. Based on this solution, the second network device may determine, based on the fifth time point, the moment, expected by the terminal device, at which release of the second connection is completed, to make an appropriate decision.

With reference to the first aspect, in a possible design, before the terminal device sends the second request message to the second network device, the method further includes: The terminal device determines a target second time-frequency resource from one or more preconfigured second time-frequency resources; and that the terminal device sends a second request message to the second network device includes: The terminal device sends the second request message to the second network device via the target second time-frequency resource. Based on this solution, a time-frequency resource used to send the second request message may be selected from a plurality of preconfigured time-frequency resources, thereby improving resource utilization and reducing power consumption.

With reference to the first aspect, in a possible design, that the terminal device determines a target second time-frequency resource from one or more preconfigured second time-frequency resources includes: The terminal device determines the target second time-frequency resource from the one or more preconfigured second time-frequency resources based on the fifth time point and/or a time required by the second network device to process the second request message, where the fifth time point is the moment, expected by the terminal device, at which release of the second connection is completed. Based on this solution, an appropriate time-frequency resource may be determined from the plurality of preconfigured second time-frequency resources based on the fifth time point and/or the time required by the second network device to process the second request message, to send the second request message.

With reference to the first aspect, in a possible design, the method further includes: The terminal device receives a second confirmation message from the second network device, where the second confirmation message indicates that the second network device agrees to release the second connection.

With reference to the first aspect, in a possible design, the first time information is determined based on an artificial intelligence AI model and/or a sensing network. Based on this solution, the first time information may be determined based on a powerful computing and sensing capability of the AI model and/or a powerful computing and sensing capability of the sensing network, so that the terminal device side controls establishment of a new connection based on the interruption time of the first connection, thereby avoiding additional signaling overheads and an additional delay caused by determining the multi-connectivity solution by a base station.

With reference to the first aspect, in a possible design, that a terminal device sends a first request message to a first network device includes: The terminal device sends the first request message to the first network device when accuracy of the AI model and/or the sensing network is greater than or equal to a first preset threshold. Based on this solution, the terminal device can request to establish the new connection only when accuracy of the AI model and/or the sensing network is greater than or equal to the first preset threshold, thereby ensuring reliability of the first request message.

With reference to the first aspect, in a possible design, the interruption time of the first connection is a time at which a probability that the first connection is interrupted is greater than or equal to a second preset threshold. Based on this solution, the interruption time of the first connection may be predicted in a manner of predicting the probability that the first connection is interrupted.

According to a second aspect, a connection control method is provided. The method may be performed by a first network device, or may be performed by a component (such as a processor, a chip, or a chip system) of the first network device, or may be implemented through a logic module or software that can implement all or some functions of the first network device. The method includes: receiving a first request message from a terminal device, where the first request message is used to request to establish a second connection to a second network device; the first request message includes first time information; and the first time information indicates an interruption time of a first connection established between the terminal device and the first network device; and then sending the first request message to the second network device.

According to the connection control method in this embodiment of this application, the terminal device can dynamically control, based on a connection status of the first connection, whether the second connection needs to be established. On the basis that data can be normally transmitted without being affected by interruption of the first connection, compared with an existing multi-connectivity solution, at least two connections do not need to be maintained by the terminal device for a long time, so that power consumption can be reduced. In addition, the terminal device actively controls connection establishment, so that signaling overheads and a delay can be reduced.

With reference to the second aspect, in a possible design, the first request message further includes a first time point, and the first time point is a moment, expected by the terminal device, at which establishment of the second connection is completed. Based on this solution, the first network device and the second network device may determine, based on the first time point, the moment, expected by the terminal device, at which establishment of the second connection is completed, to make an appropriate decision.

With reference to the second aspect, in a possible design, that the first network device sends the first request message to the second network device includes: The first network device sends the first request message to the second network device at a second time point, where the second time point is determined based on the first time point. Based on this solution, the first network device may determine, based on the first time point, an appropriate time for sending the first request message to the second network device.

With reference to the second aspect, in a possible design, the method further includes: The first network device receives a first confirmation message from the second network device, where the first confirmation message indicates that the second network device agrees to establish the second connection to the terminal device; and the first network device sends the first confirmation message to the terminal device.

With reference to the second aspect, in a possible design, the first request message further includes the first time point, and the first time point is the moment, expected by the terminal device, at which establishment of the second connection is completed; and that the first network device sends the first confirmation message to the terminal device includes: The first network device sends the first confirmation message to the terminal device at a third time point, where the third time point is determined based on the first time point. Based on this solution, the first network device may determine, based on the first time point, an appropriate time for sending the first confirmation message to the terminal device.

With reference to the second aspect, in a possible design, the method further includes: The first network device stops sending data to the terminal device based on the first time information within the interruption time of the first connection; or the first network device sends data to the terminal device based on the first time information within the interruption time of the first connection. Based on this solution, the first network device may determine the interruption time of the first connection based on the first time information, to choose to stop sending data within the interruption time, so as to reduce resource overheads, or continue to send data within the interruption time, so as to prevent data transmission interruption caused by unreliable first time information.

With reference to the second aspect, in a possible design, the first time information is determined based on an artificial intelligence AI model and/or a sensing network. Based on this solution, the first time information may be determined based on a powerful computing and sensing capability of the AI model and/or a powerful computing and sensing capability of the sensing network, so that the terminal device side controls establishment of a new connection based on the interruption time of the first connection, thereby avoiding additional signaling overheads and an additional delay caused by determining the multi-connectivity solution by a base station.

With reference to the second aspect, in a possible design, the interruption time of the first connection is a time at which a probability that the first connection is interrupted is greater than or equal to a second preset threshold. Based on this solution, the interruption time of the first connection may be predicted in a manner of predicting the probability that the first connection is interrupted.

According to a third aspect, a connection control method is provided. The method may be performed by a second network device, or may be performed by a component (such as a processor, a chip, or a chip system) of the second network device, or may be implemented through a logic module or software that can implement all or some functions of the second network device. The method includes: receiving a first request message from a first network device, where the first request message is used to request the second network device to establish a second connection to a terminal device; the first request message includes first time information; and the first time information indicates an interruption time of a first connection established between the terminal device and the first network device; the second network device establishes the second connection to the terminal device; and the second network device transmits data with the terminal device through the second connection.

According to the connection control method in this embodiment of this application, the terminal device can dynamically control, based on a connection status of the first connection, whether the second connection needs to be established. On the basis that data can be normally transmitted without being affected by interruption of the first connection, compared with an existing multi-connectivity solution, at least two connections do not need to be maintained by the terminal device for a long time, so that power consumption can be reduced. In addition, the terminal device actively controls connection establishment, so that signaling overheads and a delay can be reduced.

With reference to the third aspect, in a possible design, before the second network device establishes the second connection to the terminal device, the method further includes: The second network device sends a first confirmation message to the first network device, where the first confirmation message indicates that the second network device agrees to establish the second connection to the terminal device.

With reference to the third aspect, in a possible design, the first request message further includes a first time point, and the first time point is a moment, expected by the terminal device, at which establishment of the second connection is completed; and that the second network device sends a first confirmation message to the first network device includes: The second network device sends the first confirmation message to the first network device at a fourth time point, where the fourth time point is determined based on the first time point. Based on this solution, the second network device may determine, based on the first time point, an appropriate time for sending the first confirmation message to the terminal device.

With reference to the third aspect, in a possible design, the method further includes: The second network device releases the second connection. Based on this solution, the second network device may release the second connection, to avoid resource overheads required for maintaining the second connection.

With reference to the third aspect, in a possible design, before the second network device releases the second connection, the method further includes: The second network device receives a second request message from the terminal device, where the second request message is used to request to release the second connection. Based on this solution, the second network device may determine, based on the second request message, that the second connection needs to be released.

With reference to the third aspect, in a possible design, second request message includes a fifth time point, and the fifth time point is a moment, expected by the terminal device, at which release of the second connection is completed; and that the second network device releases the second connection includes: The second network device releases the second connection at a sixth time point, where the sixth time point is determined based on the fifth time point. Based on this solution, the second network device may determine, based on the fifth time point, an appropriate time for releasing the second connection.

With reference to the third aspect, in a possible design, that the second network device releases the second connection includes: The second network device releases the second connection at a seventh time point, where the seventh time point is determined based on the interruption time of the first connection. Based on this solution, the second network device may determine, based on the interruption time of the first connection, an appropriate time for releasing the second connection.

With reference to the third aspect, in a possible design, the method further includes: The second network device sends a second confirmation message to the terminal device, where the second confirmation message indicates that the second network device agrees to release the second connection. Based on this solution, the second network device may send the second confirmation message, so that the terminal device learns that the second network device agrees to release the second connection.

With reference to the third aspect, in a possible design, the first time information is determined based on an artificial intelligence AI model and/or a sensing network. Based on this solution, the first time information may be determined based on a powerful computing and sensing capability of the AI model and/or a powerful computing and sensing capability of the sensing network, so that the terminal device side controls establishment of a new connection based on the interruption time of the first connection, thereby avoiding additional signaling overheads and an additional delay caused by determining the multi-connectivity solution by a base station.

With reference to the third aspect, in a possible design, the interruption time of the first connection is a time at which a probability that the first connection is interrupted is greater than or equal to a second preset threshold. Based on this solution, the interruption time of the first connection may be predicted in a manner of predicting the probability that the first connection is interrupted.

According to a fourth aspect, a connection control method is provided. The method may be performed by a terminal device, or may be performed by a component (such as a processor, a chip, or a chip system) of the terminal device, or may be implemented through a logic module or software that can implement all or some functions of the terminal device. The method includes: sending a third request message to a second network device, where the third request message is used to request to switch a second connection established with the second network device from a first mode to a second mode; the third request message includes second time information; the second time information indicates an interruption time of a first connection established between the terminal device and the first network device; and power at which the terminal device works in the second mode is higher than power at which the terminal device works in the first mode; then switching the second connection from the first mode to the second mode; and transmitting data in the second mode through the second connection.

According to the connection control method in this embodiment of this application, the terminal device can dynamically control a power mode of the second connection based on a connection status of the first connection. On the basis that data can be normally transmitted without being affected by interruption of the first connection, additional power consumption and an additional delay caused by frequent connection establishment or release can be avoided. In addition, the terminal device actively controls connection mode switching, so that signaling overheads and a delay can be reduced.

With reference to the fourth aspect, in a possible design, the third request message further includes an eighth time point, and the eighth time point is a moment, expected by the terminal device, at which the second connection is switched to the second mode. Based on this solution, the second network device may determine, based on the eighth time point, the moment, expected by the terminal device, at which switching of the second connection is completed, to make an appropriate decision.

With reference to the fourth aspect, in a possible design, before the terminal device sends the third request message to the second network device, the method further includes: The terminal device determines a target third time-frequency resource from one or more preconfigured third time-frequency resources; and that a terminal device sends a third request message to a second network device includes: The terminal device sends the third request message to the second network device via the target third time-frequency resource. Based on this solution, a time-frequency resource used to send the third request message may be selected from a plurality of preconfigured time-frequency resources, thereby improving resource utilization and reducing power consumption.

With reference to the fourth aspect, in a possible design, that the terminal device determines a target third time-frequency resource from one or more preconfigured third time-frequency resources includes: The terminal device determines the target third time-frequency resource from the one or more preconfigured third time-frequency resources based on the eighth time point and/or a time required by the second network device to process the third request message, where the eighth time point is a moment, expected by the terminal device, at which the second connection is switched to the second mode. Based on this solution, an appropriate time-frequency resource may be determined from the plurality of preconfigured third time-frequency resources based on the eighth time point and/or the time required by the second network device to process the third request message, to send the third request message.

With reference to the fourth aspect, in a possible design, before the terminal device switches the second connection from the first mode to the second mode, the method further includes: The terminal device receives a third confirmation message from the second network device, where the third confirmation message indicates that the second network device agrees to switch the second connection to the second mode.

With reference to the fourth aspect, in a possible design, the method further includes: The terminal device switches the second connection from the second mode to the first mode when the first connection is restored; or the terminal device switches the second connection from the second mode to the first mode when a connection status of the second connection meets a second condition. Based on this solution, the terminal device may switch, based on the status of the first connection or the status of the second connection again, a mode of the second connection to the first mode with low required power, thereby reducing resource overheads.

With reference to the fourth aspect, in a possible design, before the terminal device switches the second connection from the second mode to the first mode, the method further includes: The terminal device sends a fourth request message to the second network device, where the fourth request message is used to request to switch the second connection to the first mode.

With reference to the fourth aspect, in a possible design, the fourth request message includes a ninth time point, and the ninth time point is a moment, expected by the terminal device, at which the second connection is switched to the first mode. Based on this solution, the second network device may determine, based on the ninth time point, the moment, expected by the terminal device, at which the second connection is switched to the first mode, to make an appropriate decision.

With reference to the fourth aspect, in a possible design, before the terminal device sends the fourth request message to the second network device, the method further includes: The terminal device determines a target fourth time-frequency resource from one or more preconfigured fourth time-frequency resources; and that the terminal device sends a fourth request message to the second network device includes: The terminal device sends the fourth request message to the second network device via the target fourth time-frequency resource. Based on this solution, a time-frequency resource used to send the fourth request message may be selected from a plurality of preconfigured time-frequency resources, thereby improving resource utilization and reducing power consumption.

With reference to the fourth aspect, in a possible design, that the terminal device determines a target fourth time-frequency resource from one or more preconfigured fourth time-frequency resources includes: The terminal device determines the target fourth time-frequency resource from the one or more preconfigured fourth time-frequency resources based on the ninth time point and/or a time required by the second network device to process the fourth request message, where the ninth time point is a moment, expected by the terminal device, at which the second connection is switched to the first mode. Based on this solution, an appropriate time-frequency resource may be determined from the plurality of preconfigured fourth time-frequency resources based on the ninth time point and/or the time required by the second network device to process the fourth request message, to send the fourth request message.

With reference to the fourth aspect, in a possible design, before the terminal device switches the second connection from the second mode to the first mode, the method further includes: The terminal device receives a fourth confirmation message from the second network device, where the fourth confirmation message indicates that the second network device agrees to switch the second connection to the first mode.

With reference to the fourth aspect, in a possible design, the method further includes: The terminal device sends a fourth request message to the second network device, where the fourth request message is used to request to switch the second connection to the first mode; and the terminal device establishes a third connection to a third network device when the terminal device receives no response message of the fourth request message within first preset duration, where a mode of the third connection is the first mode. Based on the connection control method provided in this embodiment of this application, a new connection can be established to another network device when there is no response to the request message sent to the network device. In other words, when the original connection cannot work normally, the terminal device can establish the new connection to implement a function of the original connection, to ensure normal data transmission.

With reference to the fourth aspect, in a possible design, before the terminal device establishes the third connection to the third network device, the method further includes: The terminal device sends a fifth request message to the first network device, where the fifth request message is used to request to establish the third connection to the third network device.

With reference to the fourth aspect, in a possible design, the fifth request message includes a tenth time point, and the tenth time point is a moment, expected by the terminal device, at which establishment of the third connection is completed. Based on this solution, the third network device may determine, based on the tenth time point, the moment, expected by the terminal device, at which establishment of the third connection is completed, to make an appropriate decision.

With reference to the fourth aspect, in a possible design, before the terminal device sends the fifth request message to the first network device, the method further includes: The terminal device determines a target fifth time-frequency resource from one or more preconfigured fifth time-frequency resources; and that the terminal device sends a fifth request message to the first network device includes: The terminal device sends the fifth request message to the first network device via the target fifth time-frequency resource. Based on this solution, a time-frequency resource used to send the fifth request message may be selected from a plurality of preconfigured time-frequency resources, thereby improving resource utilization and reducing power consumption.

With reference to the fourth aspect, in a possible design, that the terminal device determines a target fifth time-frequency resource from one or more preconfigured fifth time-frequency resources includes: The terminal device determines the target fifth time-frequency resource from the one or more preconfigured fifth time-frequency resources based on the tenth time point and/or a time required by the third network device to process the fifth request message, where the tenth time point is a moment, expected by the terminal device, at which establishment of the third connection is completed. Based on this solution, an appropriate time-frequency resource may be determined from the plurality of preconfigured fifth time-frequency resources based on the tenth time point and/or the time required by the third network device to process the fifth request message, to send the fifth request message.

With reference to the fourth aspect, in a possible design, before the terminal device establishes the third connection to the third network device, the method further includes: The terminal device receives a fifth confirmation message from the third network device, where the fifth confirmation message indicates that the third network device agrees to establish the third connection to the terminal device.

With reference to the fourth aspect, in a possible design, the second time information is determined based on an artificial intelligence AI model and/or a sensing network. Based on this solution, the first time information may be determined based on a powerful computing and sensing capability of the AI model and/or a powerful computing and sensing capability of the sensing network, so that the terminal device side controls establishment of a new connection based on the interruption time of the first connection, thereby avoiding additional signaling overheads and an additional delay caused by determining the multi-connectivity solution by a base station.

With reference to the fourth aspect, in a possible design, that a terminal device sends a third request message to a second network device includes: The terminal device sends the third request message to the second network device when accuracy of the AI model and/or the sensing network is greater than or equal to a third preset threshold. Based on this solution, the terminal device can request to establish the new connection only when accuracy of the AI model and/or the sensing network is greater than or equal to the third preset threshold, thereby ensuring reliability of the fifth request message.

With reference to the fourth aspect, in a possible design, the interruption time of the first connection is a time at which a probability that the first connection is interrupted is greater than or equal to a fourth preset threshold. Based on this solution, the interruption time of the first connection may be predicted in a manner of predicting the probability that the first connection is interrupted.

With reference to the fourth aspect, in a possible design, a mode of the first connection is a second mode. Based on this solution, the connection established between the terminal device and the first network device may maintain the second mode, to ensure that data can be normally transmitted in most time.

According to a fifth aspect, a connection control method is provided. The method may be performed by a second network device, or may be performed by a component (such as a processor, a chip, or a chip system) of the second network device, or may be implemented through a logic module or software that can implement all or some functions of the second network device. The method includes: receiving a third request message from a terminal device, where the third request message is used to request to switch a second connection established between the terminal device and the second network device from a first mode to a second mode; the third request message includes second time information; the second time information indicates an interruption time of a first connection established between the terminal device and the first network device; and power at which the terminal device works in the second mode is higher than power at which the terminal device works in the first mode; switching the second connection from the first mode to the second mode; and transmitting data through the second connection.

According to the connection control method in this embodiment of this application, the terminal device can dynamically control a power mode of the second connection based on a connection status of the first connection. On the basis that data can be normally transmitted without being affected by interruption of the first connection, additional power consumption and an additional delay caused by frequent connection establishment or release can be avoided. In addition, the terminal device actively controls connection mode switching, so that signaling overheads and a delay can be reduced.

With reference to the fifth aspect, in a possible design, before the second network device switches the second connection from the first mode to the second mode, the method further includes: The second network device sends a third confirmation message to the terminal device, where the third confirmation message indicates that the second network device agrees to switch the second connection to the second mode.

With reference to the fifth aspect, in a possible design, the third request message further includes an eighth time point, and the eighth time point is a moment, expected by the terminal device, at which the second connection is switched to the second mode; and that the second network device sends a third confirmation message to the terminal device includes: The second network device sends the third confirmation message to the terminal device at an eleventh time point, where the eleventh time point is determined based on the eighth time point. Based on this solution, the second network device may determine, based on the eighth time point, an appropriate time point for sending the third confirmation message to the terminal device.

With reference to the fifth aspect, in a possible design, the method further includes: The second network device switches the second connection from the second mode to the first mode again. Based on this solution, a mode of the second connection may be switched back to the first mode with low required power, thereby reducing resource overheads.

With reference to the fifth aspect, in a possible design, before the second network device switches the second connection from the second mode to the first mode, the method further includes: The second network device receives a fourth request message from the terminal device, where the fourth request message is used to request to switch the second connection to the first mode.

With reference to the fifth aspect, in a possible design, the fourth request message includes a ninth time point, and the ninth time point is a moment, expected by the terminal device, at which the second connection is switched to the first mode; and that the second network device switches the second connection from the second mode to the first mode includes: The second network device switches the second connection from the second mode to the first mode at a twelfth time point, where the twelfth time point is determined based on the ninth time point. Based on this solution, the second network device may determine, based on the ninth time point, an appropriate time for switching the second connection to the first mode.

With reference to the fifth aspect, in a possible design, that the second network device switches the second connection from the second mode to the first mode includes: The second network device switches the second connection from the second mode to the first mode at a thirteenth time point, where the thirteenth time point is determined based on the interruption time of the first connection. Based on this solution, the second network device may determine, based on the interruption time of the first connection, an appropriate time for switching the second connection to the first mode.

With reference to the fifth aspect, in a possible design, the method further includes: The second network device sends a fourth confirmation message to the terminal device, where the fourth confirmation message indicates that the second network device agrees to switch the second connection to the first mode.

With reference to the fifth aspect, in a possible design, the second time information is determined based on an artificial intelligence AI model and/or a sensing network. Based on this solution, the second time information may be determined based on a powerful computing and sensing capability of the AI model and/or a powerful computing and sensing capability of the sensing network, so that the terminal device side controls establishment of a new connection based on the interruption time of the first connection, thereby avoiding additional signaling overheads and an additional delay caused by determining the multi-connectivity solution by a base station.

With reference to the fifth aspect, in a possible design, the interruption time of the first connection is a time at which a probability that the first connection is interrupted is greater than or equal to a fourth preset threshold. Based on this solution, the interruption time of the first connection may be predicted in a manner of predicting the probability that the first connection is interrupted.

With reference to the fifth aspect, in a possible design, a mode of the first connection is a second mode. Based on this solution, the connection established between the terminal device and the first network device may maintain the second mode, to ensure that data can be normally transmitted in most time.

According to a sixth aspect, a communication apparatus configured to implement the foregoing methods is provided. The communication apparatus may be the terminal device in the first aspect or the fourth aspect, or an apparatus including the terminal device, or an apparatus such as a chip included in the terminal device. Alternatively, the communication apparatus may be the first network device in the second aspect, or an apparatus including the first network device, or an apparatus included in the first network device. Alternatively, the communication apparatus may be the second network device in the third aspect or the fifth aspect, or an apparatus including the second network device, or an apparatus included in the second network device.

The communication apparatus includes a corresponding module, unit, or means (means) for implementing the foregoing method. The module, unit, or means may be implemented through hardware, software, or hardware executing corresponding software. The hardware or the software includes one or more modules or units corresponding to the foregoing functions.

According to a seventh aspect, a communication apparatus is provided, including a processor. The processor is configured to execute instructions stored in a memory, and when the processor executes the instructions, the communication apparatus is enabled to perform the method according to any one of the foregoing aspects. The communication apparatus may be the terminal device in the first aspect or the fourth aspect, or an apparatus including the terminal device, or an apparatus such as a chip included in the terminal device. Alternatively, the communication apparatus may be the first network device in the second aspect, or an apparatus including the first network device, or an apparatus included in the first network device. Alternatively, the communication apparatus may be the second network device in the third aspect or the fifth aspect, or an apparatus including the second network device, or an apparatus included in the second network device.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to an eighth aspect, a communication apparatus is provided, including a processor and an interface circuit. The interface circuit is configured to communicate with a module outside the communication apparatus; and the processor is configured to perform the method according to any one of the foregoing aspects by using a logic circuit or by running a computer program or instructions. The communication apparatus may be the terminal device in the first aspect or the fourth aspect, or an apparatus including the terminal device, or an apparatus such as a chip included in the terminal device. Alternatively, the communication apparatus may be the first network device in the second aspect, or an apparatus including the first network device, or an apparatus included in the first network device. Alternatively, the communication apparatus may be the second network device in the third aspect or the fifth aspect, or an apparatus including the second network device, or an apparatus included in the second network device.

Alternatively, the interface circuit may be a code/data read/write interface circuit. The interface circuit is configured to receive computer-executable instructions (the computer-executable instructions are stored in a memory, and may be directly read from the memory, or may be read through another component) and transmit the computer-executable instructions to the processor, so that the processor runs the computer-executable instructions to perform the method according to any one of the foregoing aspects.

In some possible designs, the communication apparatus may be a chip or a chip system.

According to a ninth aspect, a computer-readable storage medium is provided. The computer-readable storage medium stores instructions; and when the instructions are run on a communication apparatus, the communication apparatus is enabled to perform the method according to any one of the foregoing aspects. The communication apparatus may be the terminal device in the first aspect or the fourth aspect, or an apparatus including the terminal device, or an apparatus such as a chip included in the terminal device. Alternatively, the communication apparatus may be the first network device in the second aspect, or an apparatus including the first network device, or an apparatus included in the first network device. Alternatively, the communication apparatus may be the second network device in the third aspect or the fifth aspect, or an apparatus including the second network device, or an apparatus included in the second network device.

According to a tenth aspect, a computer program product including instructions is provided. When the computer program product runs on a communication apparatus, the communication apparatus is enabled to perform the method according to any one of the foregoing aspects. The communication apparatus may be the terminal device in the first aspect or the fourth aspect, or an apparatus including the terminal device, or an apparatus such as a chip included in the terminal device. Alternatively, the communication apparatus may be the first network device in the second aspect, or an apparatus including the first network device, or an apparatus included in the first network device. Alternatively, the communication apparatus may be the second network device in the third aspect or the fifth aspect, or an apparatus including the second network device, or an apparatus included in the second network device.

According to an eleventh aspect, a communication apparatus (for example, the communication apparatus may be a chip or a chip system) is provided. The communication apparatus includes a processor, configured to implement a function in any one of the foregoing aspects. In a possible design, the communication apparatus further includes a memory, and the memory is configured to store necessary program instructions and data. When being a chip system, the communication apparatus may include a chip, or may include a chip and another discrete component.

For technical effect brought by any design manner in the sixth aspect to the eleventh aspect, refer to the technical effect brought by different design manners in the first aspect to the fifth aspect. Details are not described herein again.

According to a twelfth aspect, a communication system is provided. The communication system includes a terminal device, a first network device, and a second network device. The terminal device is configured to perform the method according to the first aspect. The first network device is configured to perform the method according to the second aspect. The second network device is configured to perform the method according to the third aspect.

According to a thirteenth aspect, a communication system is provided. The communication system includes a terminal device and a second network device. The terminal device is configured to perform the method according to the fourth aspect. The second network device is configured to perform the method according to the fifth aspect.

### BRIEF DESCRIPTION OF DRAWINGS

FIG. 1 is a diagram of a blocked connection between a terminal device and a base station according to an embodiment of this application;
FIG. 2 is a diagram of a structure of a communication system according to an embodiment of this application;
FIG. 3 is a diagram of structures of a network device and a terminal device according to an embodiment of this application;
FIG. 4 is a diagram of another structure of a terminal device according to an embodiment of this application;
FIG. 5 is an interactive diagram of a connection control method according to an embodiment of this application;
FIG. 6 is an interactive diagram of another connection control method according to an embodiment of this application;
FIG. 7 is an interactive diagram of still another connection control method according to an embodiment of this application;
FIG. 8 is an interactive diagram of still another connection control method according to an embodiment of this application;
FIG. 9 is an interactive diagram of still another connection control method according to an embodiment of this application;
FIG. 10 is an interactive diagram of still another connection control method according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of still another communication apparatus according to an embodiment of this application.

### DESCRIPTION OF EMBODIMENTS

For ease of understanding the technical solutions in embodiments of this application, technologies related to this application are first briefly described as follows.

### 1. Artificial intelligence (artificial intelligence, AI) technology

AI has great application potentials in many aspects, such as modeling and learning in a complex unknown environment, channel prediction, intelligent signal generation and processing, network status tracking and intelligent scheduling, and network optimization and deployment, and is of great significance to research on communication technologies. In a communication system in which the AI technology is introduced, an AI model may be configured for a device, and an AI-based method is used to replace a numerical formula-based method in an original network function by using the AI model, thereby improving network resource utilization efficiency and improving user service experience.

### 2. Sensing network

The sensing network is a system that senses attributes and statuses of a service, a network, a user, a terminal device, and an environmental object. Specifically, the sensing network may obtain information about a target object in the sensing network based on a node in the sensing network, for example, a device such as a sensor, to implement functions such as target positioning (including ranging, speed measurement, and angle measurement), target imaging, target detection, and target identification.

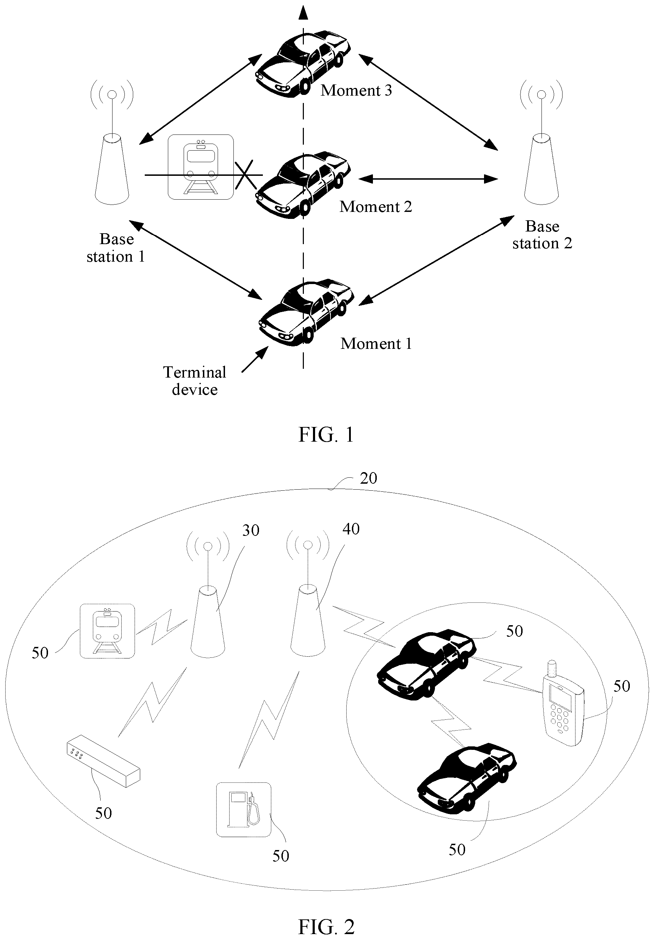

When the terminal device moves, a link between the terminal device and a blocked base station may be interrupted due to various types of blocking, for example, a vehicle, a building, or a tree. To ensure continuous data transmission, a plurality of connections to different base stations may be configured for the terminal device at the same time. When one of the connections is interrupted, another connection may be used to continue to transmit data. This technology in which the terminal device needs to maintain at least two connections at the same time may be referred to as a multi-connectivity technology. For example, as shown in FIG. 1, the terminal device maintains connections to both a base station 1 and a base station 2. At a moment 1, the two connections work normally. At a moment 2, the connection between the terminal device and the base station 1 is interrupted because the terminal device is blocked. In this case, the terminal device may transmit data through the connection between the terminal device and the base station 2. At a moment 3, the terminal device is no longer blocked, the connection between the terminal device and the base station 1 is restored, and the terminal device maintains the connections to both the base station 1 and the base station 2.

However, when the terminal device maintains at least two connections at the same time, resource and power overheads on the terminal device side and the base station side significantly increase. In addition, currently, the base station mainly controls, based on information reported by the terminal device, whether the terminal device maintains multi-connectivity. This causes extra signaling overheads and a delay. Therefore, how to reduce the delay and overheads of resources, signaling, and power without interrupting data transmission is a problem to be urgently resolved currently.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The connection control method provided in embodiments of this application may be applied to various communication systems. For example, the connection control method provided in embodiments of this application may be applied to a long term evolution (long term evolution, LTE) system, a fifth generation (fifth-generation, 5G) system, or another future-oriented similar new system, for example, a sixth generation (sixth-generation, 6G) system. This is not specifically limited in embodiments of this application. In addition, the terms "system" and "network" may be interchangeable.

FIG. 2 shows a communication system 20 according to an embodiment of this application. The communication system 20 includes a first network device 30, a second network device 40, and one or more terminal devices 50. The terminal device 50 may communicate with the first network device 30 and/or the second network device 40 in a wireless manner. The first network device 30 and the second network device 40 may communicate with each other via a backhaul (backhaul) link. The backhaul link may be a wired backhaul link (for example, an optical fiber or a copper cable), or may be a wireless backhaul link (for example, a microwave). Optionally, different terminal devices 50 may communicate with each other. The terminal device 50 may be located at a fixed position, or may be mobile.

It should be noted that FIG. 2 is merely a diagram. Although not shown, another network device may further be included in the communication system 20. For example, the communication system 20 may further include one or more of a core network device, a wireless relay device, and a wireless backhaul device. This is not specifically limited herein. The network device may be connected to the core network device in a wireless or wired manner. The core network device and the first network device 30 and/or the second network device 40 may be different independent physical devices, or a function of the core network device and a logical function of the first network device 30 and/or the second network device 40 may be integrated into a same physical device, or some functions of the core network device and some functions of the first network device 30 and/or the second network device 40 may be integrated into a physical device. This is not specifically limited in embodiments of this application.

An example in which the first network device 30 and the second network device 40 shown in FIG. 2 interact with any terminal device 50 is used. In the connection control method provided in embodiments of this application, the terminal device 50 sends a first request message to the first network device 30, where the first request message is used to request to establish a second connection to the second network device 40, the first request message includes first time information, and the first time information indicates an interruption time of a first connection established between the terminal device 50 and the first network device 30. The first network device 30 sends the first request message to the second network device 40. The terminal device 50 establishes the second connection to the second network device 40, and the terminal device 50 transmits data through the second connection. Specific implementation and technical effect of the solution are described in detail in subsequent method embodiments, and details are not described herein again.

Optionally, the network device in embodiments of this application is a device that connects the terminal device to a wireless network. The network device in embodiments of this application may include various forms of base stations (base station), for example, may be a macro base station, a micro base station (also referred to as a small cell), a relay station, an access point, a transmission point (transmission point, TP), an evolved NodeB (evolved NodeB, eNodeB), a transmission reception point (transmission reception point, TRP), a next-generation base station (next-generation base station, gNB) in a 5G mobile communication system, a device that implements a base station function in an evolved communication system after 5G, a mobile switching center, a device that bears a base station function in device-to-device (Device-to-device, D2D), vehicle-to-everything (vehicle-to-everything, V2X), machine-to-machine (machine-to-machine, M2M) communication, or the like; or may be a network device in a non-terrestrial communication network (non-terrestrial network, NTN) communication system, that is, may be deployed on a high-altitude platform or a satellite; or may be a module or a unit that completes some functions of a base station, for example, may be a central unit (central unit, CU) or a distributed unit (distributed unit, DU) in a cloud access network (cloud radio access network, C-RAN) system. A specific technology and a specific device form that are used by the network device are not limited in embodiments of this application. All or some functions of the network device in this application may alternatively be implemented by using a software function running on hardware, or may be implemented by using an instantiated virtualization function on a platform (for example, a cloud platform). In this application, unless otherwise specified, the network device is a radio access network device.

Optionally, the terminal device in embodiments of this application may be a device with a wireless transceiver function, or may be referred to as a terminal (terminal). The terminal device may be specifically user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, personal digital assistant (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS), a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used by the terminal device are not limited in embodiments of this application. All or some functions of the terminal device in this application may alternatively be implemented by using a software function running on hardware, or may be implemented by using an instantiated virtualization function on a platform (for example, a cloud platform).

Optionally, in embodiments of this application, the network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited in embodiments of this application.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other through a spectrum below 6 gigahertz (gigahertz, GHz), may communicate with each other through a spectrum above 6 GHz, or may communicate with each other through both a spectrum below 6 GHz and a spectrum above 6 GHz. A spectrum resource used between the network device and the terminal device is not limited in embodiments of this application.

Optionally, the network device and the terminal device in embodiments of this application may also be referred to as communication apparatuses, and each may be a general-purpose device or a dedicated device. This is not specifically limited in embodiments of this application.

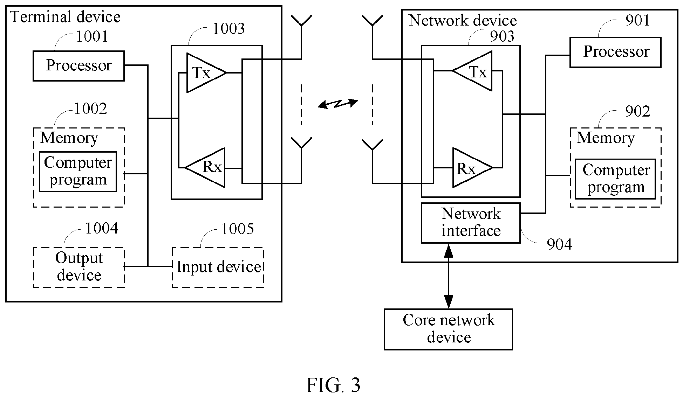

Optionally, FIG. 3 is a diagram of structures of the network device and the terminal device according to this embodiment of this application. The terminal device 50 in FIG. 2 may use a structure of the terminal device shown in FIG. 3, and the first network device 30 or the second network device 40 in FIG. 2 may use a structure of the network device shown in FIG. 3.

The terminal device includes at least one processor 1001 and at least one transceiver 1003. Optionally, the terminal device may further include at least one memory 1002, at least one output device 1004, or at least one input device 1005.

The processor 1001, the memory 1002, and the transceiver 1003 are connected through a communication line. The communication line may include a path for transmitting information between the foregoing components.

The processor 1001 may be a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like. During specific implementation, in an embodiment, the processor 1001 may include a plurality of CPUs, and the processor 1001 may be a single-core processor or a multi-core processor. The processor herein may be one or more devices, circuits, or processing cores configured to process data.

The memory 1002 may be an apparatus with a storage function. For example, the memory 1002 may be a read-only memory (read-only memory, ROM) or another type of static storage device that can store static information and instructions, a random access memory (random access memory, RAM), or another type of dynamic storage device that can store information and instructions, or may be a programmable ROM (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or other optical disk storage, optical disk storage (including a compact disc, a laser disc, an optical disc, a digital versatile disc, a Blu-ray disc, and the like), a magnetic disk storage medium or another magnetic storage device, or any other medium that can be configured to carry or store desired program code in a form of an instruction or a data structure and that can be accessed by a computer, but is not limited thereto. The memory 1002 may exist independently, and is connected to the processor 1001 through a communication line. The memory 1002 and the processor 1001 may alternatively be integrated together.

The memory 1002 is configured to store computer-executable instructions for executing the solution of this application, and the processor 1001 controls execution of the computer-executable instructions. Specifically, the processor 1001 is configured to execute the computer-executable instructions stored in the memory 1002, to implement the connection control method in embodiments of this application.

Alternatively, optionally, in embodiments of this application, the processor 1001 may perform a processing-related function in the connection control method provided in the following embodiment of this application, and the transceiver 1003 is responsible for communicating with another device or a communication network. This is not specifically limited in embodiments of this application.

Optionally, the computer-executable instructions in this embodiment of this application may also be referred to as application program code or computer program code. This is not specifically limited in embodiments of this application.

The transceiver 1003 may use any apparatus such as a transceiver, and is configured to communicate with another device or a communication network, for example, an Ethernet, a radio access network (radio access network, RAN), or a wireless local area network (wireless local area networks, WLAN). The transceiver 1003 includes a transmitter (transmitter, Tx) and a receiver (receiver, Rx).

The output device 1004 communicates with the processor 1001, and may display information in a plurality of manners. For example, the output device 1004 may be a liquid crystal display (liquid crystal display, LCD), a light emitting diode (light emitting diode, LED) display device, a cathode ray tube (cathode ray tube, CRT) display device, a projector (projector), or the like.

The input device 1005 communicates with the processor 1001, and may receive user input in a plurality of manners. For example, the input device 1005 may be a mouse, a keyboard, a touchscreen device, or a sensor device.

The network device includes at least one processor 901, at least one transceiver 903, and at least one network interface 904. Optionally, the network device may further include at least one memory 902. The processor 901, the memory 902, the transceiver 903, and the network interface 904 are connected through a communication line. The network interface 904 is configured to connect to a core network device through a link (for example, an S1 interface), or connect to a network interface of another network device through a wired or wireless link (for example, an X2 interface) (not shown in FIG. 3). This is not specifically limited in embodiments of this application. In addition, for related descriptions of the processor 901, the memory 902, and the transceiver 903, refer to descriptions of the processor 1001, the memory 1002, and the transceiver 1003 in the terminal device. Details are not described herein again.

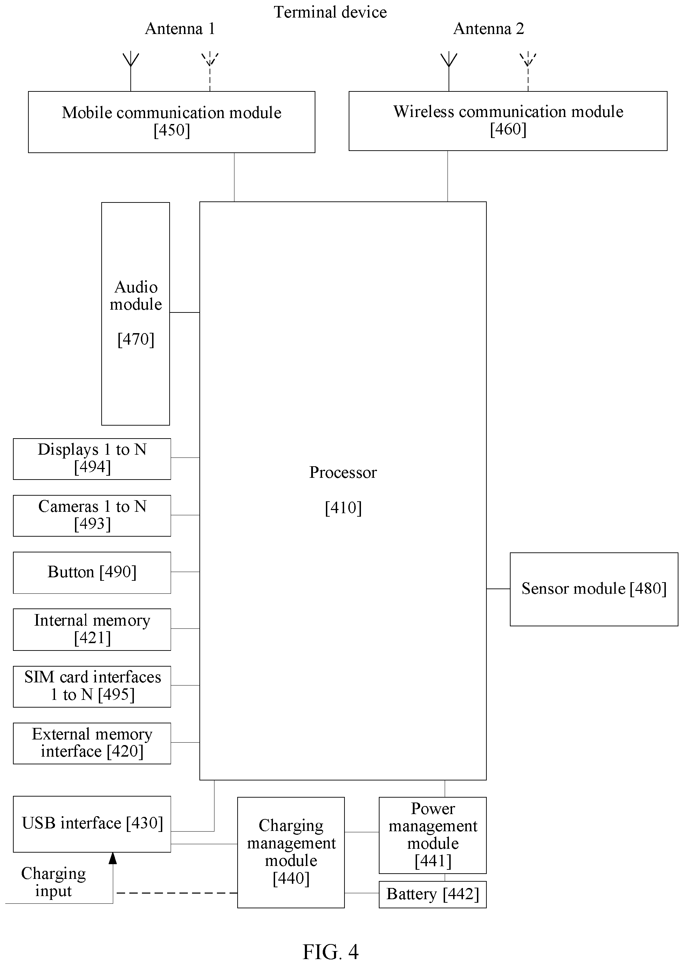

With reference to the diagram of the structure of the terminal device shown in FIG. 3, for example, FIG. 4 is a specific form of a structure of the terminal device according to an embodiment of this application.

In some embodiments, a function of the processor 1001 in FIG. 3 may be implemented through a processor 410 in FIG. 4.

In some embodiments, a function of the transceiver 1003 in FIG. 3 may be implemented through an antenna 1, an antenna 2, a mobile communication module 450, a wireless communication module 460, or the like in FIG. 4. The mobile communication module 450 may provide a solution that is applied to the terminal device and that includes a wireless communication technology such as LTE, NR, or future mobile communication. The wireless communication module 460 may provide a solution that is applied to the terminal device and that includes a wireless communication technology such as WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), infrared, or the like. In some embodiments, the antenna 1 of the terminal device is coupled to the mobile communication module 450, and the antenna 2 is coupled to the wireless communication module 460, so that the terminal device may communicate with a network and another device by using a wireless communication technology.

In some embodiments, a function of the memory 1002 in FIG. 3 may be implemented through an internal memory 421 in FIG. 4, an external memory connected to an external memory interface 420, or the like.

In some embodiments, a function of the output device 1004 in FIG. 3 may be implemented through a display 494 in FIG. 4.

In some embodiments, a function of the input device 1005 in FIG. 3 may be implemented through a mouse, a keyboard, a touchscreen device, or a sensor module 480 in FIG. 4.

In some embodiments, as shown in FIG. 4, the terminal device may further include one or more of an audio module 470, a camera 493, a button 490, a subscriber identity module (subscriber identity module, SIM) card interface 495, a universal serial bus (universal serial bus, USB) interface 430, a charging management module 440, a power management module 441, and a battery 442.

It may be understood that the structure shown in FIG. 4 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented through hardware, software, or a combination of software and hardware.

With reference to FIG. 1 to FIG. 4, the following describes in detail the connection control method provided in embodiments of this application by using an example in which the first network device 30 and the second network device 40 shown in FIG. 2 interact with any terminal device 50.

It should be noted that names of messages between network elements, names of parameters in the messages, or the like in the following embodiments of this application are merely examples, and there may be other names in a specific implementation. This is not specifically limited in embodiments of this application.

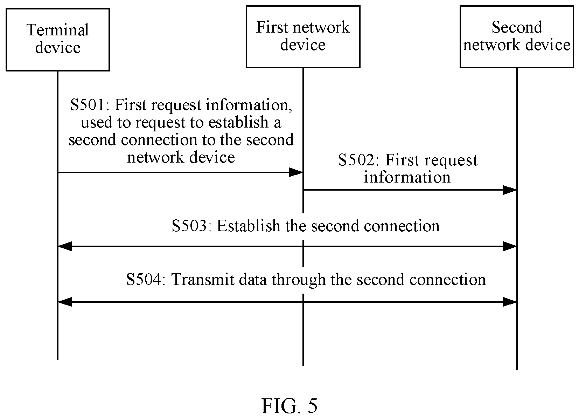

FIG. 5 shows a connection control method provided in an embodiment of this application. In FIG. 5, an example in which a first network device, a second network device, and a terminal device are used as execution bodies of an interaction diagram is used to illustrate the method. However, the execution bodies of the interaction diagram are not limited in this application. For example, the first network device in FIG. 5 may also be a chip, a chip system, or a processor that supports the first network device in implementing the method, or may be a logic module or software that can implement all or some functions of the first network device. The terminal device in FIG. 5 may also be a chip, a chip system, or a processor that supports the terminal device in implementing the method, or may be a logic module or software that can implement all or some functions of the terminal device. The second network device in FIG. 5 may also be a chip, a chip system, or a processor that supports the second network device in implementing the method, or may be a logic module or software that can implement all or some functions of the second network device. The connection control method includes S501 to S504.

S501: The terminal device sends a first request message to the first network device, and correspondingly, the first network device receives the first request message. The first request message is used to request to establish a second connection to the second network device; the first request message includes first time information; and the first time information indicates an interruption time of a first connection established between the terminal device and the first network device.

S502: The first network device sends the first request message to the second network device, and correspondingly, the second network device receives the first request message from the first network device.

S503: The terminal device establishes a second connection to the second network device.

S504: The terminal device transmits data through the second connection.

For S501, in this embodiment of this application, the terminal device establishes the first connection to the first network device. The terminal device may determine, based on a predicted connection status of the first connection, whether to send the first request message to the first network. If it is predicted that the first connection is to be interrupted, the terminal device sends the first request message to the first network device, to request to establish a new connection to the second network device. The new connection may be referred to as the second connection. The first request message includes the first time information indicating the interruption time of the first connection.

It should be noted that, in some scenarios in this embodiment of this application, the first request message may be equivalent to the first time information. In this case, it may be understood as that the first request message includes only the first time information, or the first request message is the first time information. In this case, S501 may be understood as that the terminal device sends the first time information to the first network device, and the first network device learns, based on the first time information, that the terminal device requests to establish the second connection to the second network device.

In this embodiment of this application, the terminal device may indicate the interruption time of the first connection based on the first time information in a plurality of forms. For example, the first time information may include a start moment (starting time) and an end moment (ending time) of the interruption time of the first connection. Alternatively, the first time information may include a start moment and interruption duration (duration) of the interruption time of the first connection. The interruption duration is duration from the start moment to an end moment, that is, the interruption duration of the first connection. Alternatively, the first time information may include an end moment and interruption duration of the interruption time of the first connection.

It should be noted that a time unit of the first time information is not limited in this embodiment of this application. For example, the time unit may be a slot (slot), a symbol (symbol), or a mini-slot (mini-slot), or may be a second, a millisecond, or a microsecond. The following provides an example in which the time unit of the first time information is the slot for description. If the first time information includes the start moment and/or the end moment of the interruption time of the first connection, the start moment and/or the end moment may be indicated by a slot index. If the first time information includes the interruption duration, the interruption duration may be indicated by a quantity of slots.

The following describes how to predict the connection status of the first connection.

In a possible implementation, the terminal device may predict the connection status of the first connection, to obtain a prediction result. Alternatively, the terminal device may obtain a prediction result from another device. The prediction result indicates the predicted connection status of the first connection.

In a possible implementation, the predicted connection status of the first connection may be a predicted connection status of the first connection after second preset duration. For example, the second preset duration is one minute, and the terminal device may predict a connection status of the first connection after one minute. Optionally, the connection status of the first connection may be periodically predicted. For example, the terminal device may predict the connection status of the first connection once at an interval of one minute.

In a possible implementation, the connection status of the first connection may be predicted in a probability form. When the connection status of the first connection includes being interrupted and normal working, a probability that the first connection is interrupted and a probability that the first connection works normally may be separately predicted. Alternatively, a probability that the first connection is interrupted may be predicted, and a probability that the first connection works normally may be determined based on the probability that the first connection is interrupted. Alternatively, a probability that the first connection works normally may be predicted, and a probability that the first connection is interrupted may be determined based on the probability that the first connection works normally. For example, the terminal device predicts that the probability that the connection status of the first connection is being interrupted is 80%, or that the terminal device predicts that the probability that the first connection is interrupted is 80%.

In a scenario in which the connection status of the first connection is predicted in the probability form, the interruption time that is of the first connection and that is indicated by the first time information may be a time at which a probability that the first connection is interrupted is greater than or equal to a second preset threshold, where the second preset threshold may be configured based on an actual requirement. For example, if the second preset threshold is 80%, the terminal device predicts that a probability that the first connection is interrupted in a slot 1 is 85%, a probability that the first connection is interrupted in a slot 2 is 90%, and a probability that the first connection is interrupted in a slot 3 is 30%, the interruption time that is of the first connection and that is predicted by the terminal device is the slot 1 to the slot 2.

In still another possible implementation, when the connection status of the first connection includes being interrupted and normal working, whether the connection status of the first connection is being interrupted or normal working may be predicted, to determine the interruption time of the first connection.

Optionally, in this embodiment of this application, the connection status of the first connection may be predicted based on an AI model and/or a sensing network. In other words, the first time information or the interruption time of the first connection may be determined based on an AI model and/or a sensing network.

The following describes possible implementations of determining the interruption time of the first connection based on the AI model and/or the sensing network in this embodiment of this application.

In a possible implementation, auxiliary information representing mobility of the terminal device may be obtained over the sensing network, and the connection status of the first connection is predicted based on the auxiliary information, to determine the interruption time of the first connection. For example, the auxiliary information may include at least one piece of information of location information of the terminal device, movement direction information, and movement speed information of the terminal device. The terminal device may obtain the auxiliary information over the sensing network, and perform prediction based on the auxiliary information. Alternatively, another device may obtain the auxiliary information over the sensing network, and perform prediction based on the auxiliary information, and the terminal device may obtain a prediction result from the device.

In another possible implementation, the AI model predicts the connection status of the first connection, and outputs a prediction result, to determine the interruption time of the first connection based on the prediction result output by the AI model. Optionally, information that is input into the AI model and that is used to obtain the prediction result may be auxiliary information representing mobility of the terminal device. Further, the auxiliary information input into the AI model may be obtained over the sensing network, or may be obtained over another network, for example, a communication network. This is not limited in embodiments of this application. The AI model may be configured on the terminal device, or may be configured on another device. The terminal device may obtain the prediction result from the device configured with the AI model.

Optionally, if the first time information is determined based on the AI model and/or the sensing network, to ensure reliability of an establishment requirement of the second connection, a condition that the terminal device sends the first request message to the first network device may include: accuracy of the AI model and/or the sensing network is greater than or equal to a first preset threshold. In other words, when the accuracy of the AI model and/or the sensing network is greater than or equal to the first preset threshold, the terminal device sends the first request message to the first network device. The first preset threshold may be set based on an actual requirement.

Optionally, the first request message may further include a first time point, and the first time point is a moment, expected by the terminal device, at which establishment of the second connection is completed.

In this embodiment of this application, "expected" may be understood as "expected to be implemented", "expected to be achieved", or "an expected target". For example, the first time point may be a target moment, expected by the terminal device, at which establishment of the second connection is completed.

Optionally, the moment expected by the terminal device may be determined by the terminal device based on a preconfigured algorithm and/or model. In a possible implementation, the moment expected by the terminal device may be determined based on the AI model and/or the sensing network.

In this embodiment of this application, for a time unit of the first time point, refer to the foregoing description of the time unit of the first time information. For example, it is assumed that the time unit of the first time point is a slot, the first time point may be indicated by a slot index, and the first time point may be a start moment or an end moment of a slot corresponding to the slot index. Optionally, whether the first time point is the start moment of the slot or the end moment of the slot may be defined in a predefined or signaling-configured manner. It should be noted that, for a time unit of a time point, for example, a second time point, that appears in the following, refer to the description herein. This is uniformly described herein, and details are not described herein again.

In this embodiment of this application, "predefined" may be understood as "predefined in a protocol", and "signaling-configured" may be understood as "configured using higher layer signaling or physical layer signaling". The higher layer signaling may include, for example, radio resource control (radio resource control, RRC) signaling, a medium access control (medium access control, MAC) control element (control element, CE), and radio link control (radio link control, RLC) signaling. The physical layer signaling may include, for example, physical downlink control information (downlink control information, DCI), signaling transmitted through a downlink physical layer channel, and the like. A physical downlink channel may be a physical downlink control channel (physical downlink control channel, PDCCH), a physical downlink shared channel (physical downlink shared channel, PDSCH), or the like.

Optionally, to ensure normal data transmission, the first time point may be earlier than or equal to the start moment of the interruption time of the first connection. The first network device may learn, based on the first request message, the moment, expected by the terminal device, at which establishment of the second connection is completed. Details are described below when S502 is described, and details are not described herein.

Optionally, the first request message may further include an identifier of the second network device, so that the first network device determines the second network device.

The following describes how the terminal device sends the first request message to the first network device.

In a possible implementation, the terminal device may determine a target first time-frequency resource from one or more predefined or signaling-configured first time-frequency resources, and send the first request message to the first network device via the target first time-frequency resource.

Optionally, the terminal device may determine the target first time-frequency resource from the one or more predefined or signaling-configured first time-frequency resources based on the first time point and/or a time required by the first network device to process the first request message. The time required by the first network device to process the first request message is duration required by the first network device to process the first request message. The time required by the first network device to process the first request message may be predicted by the terminal device, for example, may be predicted by using an AI model and/or a sensing network. Alternatively, the time required by the first network device to process the first request message may be predefined or signaling-configured. It may be understood that if the terminal device may determine the target first time-frequency resource based on the first time point, a time domain location of the target first time-frequency resource need to be earlier than the first time point.

For example, it is assumed that three first time-frequency resources are preconfigured for the terminal device. When the terminal device determines the target first time-frequency resource based on the first time point and the time required by the first network device to process the first request message, if the time required by the first network device to process the first request message is long, the terminal device may select, from the three first time-frequency resources, a first time-frequency resource earliest in time domain, that is, a 1^{st} first time-frequency resource, as the target first time-frequency resource, to prevent the first network device from not completing processing of the first request message before the first time point. If the time required by the first network device to process the first request message is short, the terminal device may select a 2^{nd} first time-frequency resource or a 3^{rd} first time-frequency resource from the three first time-frequency resources as the target first time-frequency resource.

Further, when determining the target first time-frequency resource, the terminal device may further consider whether the first time-frequency resource is occupied, for example, whether the first time-frequency resource is configured to transmit other data or signaling.

In another possible implementation, the terminal device may send the first request message to the first network device via a resource used to transmit uplink data. For example, the first request message may be carried in a MAC CE.

Optionally, after the terminal device sends the first time information to the first network device, if the predicted interruption time of the first connection is updated, the terminal device may send new first time information to the first network device again, where the new first time information indicates updated interruption time of the first connection. Further, the first network device may send the new first time information to the second network device. For example, the terminal device predicts the connection status of the first connection for the first time, and an obtained interruption time of the first connection is a slot 1 to a slot 5. The terminal device sends, to the first network device, first time information indicating that the interruption time of the first connection is the slot 1 to the slot 5. Then, the terminal device predicts the connection status of the first connection again, and an obtained interruption time of the first connection is updated to the slot 1 to a slot 6. The terminal device sends, to the first network device again, first time information indicating that the interruption time of the first connection is updated to the slot 1 to the slot 6.

Optionally, the second network device to which the terminal device requests to establish the second connection may be a network device, and it is predicted that a new connection established between the network device and the terminal device can work normally within the interruption time of the first connection. For example, the terminal device is preconfigured with one or more candidate network devices. After determining the interruption time of the first connection, the terminal device may predict whether an established new connection can work normally within the interruption time of the first connection if the terminal device establishes the new connection to the candidate network device. Therefore, the terminal device may select a candidate network device from the candidate network devices as the second network device, and it is predicted that a new connection established between the candidate network device and the terminal device can work normally within the interruption time of the first connection. For a specific implementation of predicting whether the established new connection can work normally within the interruption time of the first connection, refer to the foregoing description of how to predict the connection status of the first connection. Details are not described herein again.

For S502, after receiving the first request message, the first network device sends the first request message to the second network device, so that the second network device learns that the terminal device requests to establish the second connection.

Optionally, when the first request message includes the first time point, the first network device may determine, based on the first time point, the moment, expected by the terminal device, at which establishment of the second connection is completed, to determine, based on the first time point, a second time point at which the first request message is sent, and send the first request message to the second network device at the second time point. It may be understood that the second time point is earlier than the first time point. For example, if the first time point is a slot 3, in other words, the terminal device expects that establishment of the second connection is completed in the slot whose index is 3, the first network device may send, based on the first time point, the first request message to the second network device in a slot whose index is 1.

Alternatively, the first network device may determine, based on a time at which the first request message is received, a time at which the first request message is sent to the second network device. For example, the first network device may send the first request message to the second network device after predefined duration by using the moment at which the first request message is received as a start time point.

Optionally, after the first network device sends the first request message to the second network device, if the second network device agrees to establish the second connection to the terminal device, the second network device may send a first confirmation message to the first network device, where the first confirmation message indicates that the second network device agrees to establish the second connection to the terminal device. After receiving the first confirmation message, the first network device sends the first confirmation message to the terminal device. The first confirmation message may also be referred to as a response message of the first request message.

Optionally, the first confirmation message may include configuration information and/or a resource that are/is used by the terminal device to establish the second connection. For example, the first confirmation message may include one or more of identification information of the second network device, a cell-radio network temporary identifier (cell-radio network temporary identity, Cell-RNTI) of the terminal device at the second network device, a security algorithm of the second network device, random access channel (random access channel, RACH) resource information of the second network device, reference signal configuration information of the second network device, synchronization signal block (synchronization signal block, SSB) information, association information between the RACH resource information of the second network device and the reference signal configuration information of the second network device, and the like. The reference signal configuration information may include configuration information of a sounding reference signal (sounding reference signal, SRS) or configuration information of channel state information reference information (channel state information reference signal, CSI-RS).

Further, when the first request message includes the first time point, the first network device may determine, based on the first time point, a third time point at which the first confirmation message is sent, and send the first confirmation message to the terminal device at the third time point. It may be understood that the third time point is earlier than the first time point. For example, if the first time point is a slot whose index is 3, in other words, the terminal device expects that establishment of the second connection is completed in the slot whose index is 3, after receiving the first confirmation message, the first network device may send, based on the first time point, the first confirmation message to the terminal device in a slot whose index is 2.

Alternatively, the first network device may determine, based on a time at which the first confirmation message is received, a time at which the first request message is sent to the terminal device. For example, the first network device may send the first confirmation message to the terminal device after predefined duration by using the moment at which the first confirmation message is received as a start time point.

In this embodiment of this application, after receiving the first request message, the first network device may perform, based on the first time information, different behaviors within the interruption time that is of the first connection and that is indicated by the first time information.

Optionally, the first network device may stop sending data to the terminal device within the interruption time of the first connection, to reduce power consumption and save resources.

Alternatively, the first network device may still send data to the terminal device within the interruption time of the first connection, to prevent a data transmission failure caused because the first connection is actually not interrupted within the interruption time that is of the first connection and that is indicated by the first time information due to inaccurate prediction, or prevent a data transmission failure caused by a failure in establishing the second connection.

In addition, optionally, the terminal device may stop receiving data through the first connection within the interruption time of the first connection. Alternatively, the terminal device may still receive data of the first network device within the interruption time of the first connection.

For S503, after the second network device receives the first request message, the terminal device may establish the second connection to the second network device. A process in which the terminal device establishes the second connection to the second network device is not limited in this embodiment of this application.

Optionally, when the second network device sends the first confirmation message to the terminal device by using the first network device, after receiving the first confirmation message, the terminal device may establish the second connection to the second network device based on the first confirmation message. Further, if the first confirmation message includes the configuration information and/or the resource that are/is used by the terminal device to establish the second connection, the terminal device may perform synchronization (uplink synchronization and/or downlink synchronization) with the second network device based on content of the first confirmation message, and establish the second connection.

Optionally, when the first request message includes the first time point, the second network device may determine, based on the first time point, the moment, expected by the terminal device, at which establishment of the second connection is completed, to determine a fourth time point at which the first confirmation message is sent, and send the first confirmation message to the first network device at the fourth time point. It may be understood that the fourth time point is earlier than the first time point. For example, if the first time point is a slot whose index is 3, in other words, the terminal device expects that establishment of the second connection is completed in the slot whose index is 3, after receiving the first request message, the second network device may send, based on the first time point, the first confirmation message to the first network device in a slot whose index is 2.

Alternatively, the second network device may determine, based on a time at which the first request message is received, a time at which the first confirmation message is sent to the first network device. For example, the second network device may send the first confirmation message to the first network device after predefined duration by using the moment at which the first request message is received as a start time point.

For S504, after establishing the second connection to the second network device, the terminal device may transmit the data through the second connection.

According to the connection control method in this embodiment of this application, the terminal device can dynamically control, based on the connection status of the first connection, whether the second connection needs to be established. On the basis that data can be normally transmitted without being affected by interruption of the first connection, compared with an existing multi-connectivity solution, at least two connections do not need to be maintained by the terminal device for a long time, so that power consumption can be reduced. In addition, the terminal device actively controls connection establishment, so that signaling overheads and a delay can be reduced.

Optionally, after S504, the connection control method provided in this embodiment of this application may further include S505.

S505: The terminal device releases the second connection, and correspondingly, the second network device also releases the second connection.

Releasing the second connection means that, on the terminal device side, the terminal device stops receiving data through the second connection, and on the second network device side, means that the second network device stops sending data through the second connection. In other words, releasing the second connection may mean that the terminal device and the network device stop receiving and sending data on allocated resources.

According to the connection control method in this embodiment of this application, the terminal device can dynamically control establishment and release of the second connection. On the basis that data can be normally transmitted without being affected by interruption of the first connection, compared with an existing multi-connectivity solution, at least two connections do not need to be maintained by the terminal device for a long time, so that power consumption can be reduced. In addition, the terminal device actively controls connection establishment, so that signaling overheads and a delay can be reduced.

In this embodiment of this application, that the terminal device releases the first connection may include two cases: S5051 and S5052.

S5051: The terminal device releases the second connection when the first connection is restored.

In this case, the terminal device may determine, based on the predicted connection status of the first connection, whether to release the second connection. If it is predicted that the first connection is to be restored, the terminal device may release the second connection, to reduce power consumption. For how to predict the connection status of the first connection, refer to the foregoing description of S501. Details are not described herein again.

S5052: The terminal device releases the second connection when a connection status of the second connection meets a first condition.

In this case, the terminal device may determine, based on the connection status of the second connection, whether to release the second connection. For example, the first condition may include that a measurement result of a channel state of the second connection is less than a specific threshold. The measurement result of the channel state of the second connection may be at least one of results of reference signal received power (reference signal received power, RSRP), reference signal received quality (reference signal received quality, RSRQ), a signal to interference plus noise ratio (signal to interference plus noise ratio, SINR), and a received signal strength indicator (received signal strength indicator, RSSI) obtained by measuring different reference signals (for example, a CSI-RS, an SRS, and an SSB). Optionally, before the terminal device releases the second connection, the terminal device may send a second request message to the second network device, where the second request message is used to request to release the second connection. After receiving the second request message, the second network device may release the second connection based on the second request message.

Optionally, the second request message may include a fifth time point, and the fifth time point is a moment, expected by the terminal device, at which release of the second connection is completed. Therefore, the second network device may determine, based on the fifth time point in the second request message, the moment, expected by the terminal device, at which release of the second connection is completed. Optionally, if the terminal device releases the second connection when the first connection is restored, the fifth time point may be determined based on a predicted restoration time of the first connection. For example, if it is predicted that the first connection is restored in a slot 2, to ensure that data transmission is not interrupted, the moment, expected by the terminal device, at which the second connection is released may be a slot 3, that is, the fifth time point may be the slot 3.

The following describes how the terminal device sends the second request message to the second network device.

In a possible implementation, the terminal device may determine a target second time-frequency resource from one or more pre-configured second time-frequency resources, and send the second request message to the second network device via the target second time-frequency resource.

Optionally, the terminal device may determine the target second time-frequency resource from the one or more predefined or signaling-configured second time-frequency resources based on the fifth time point and/or a time required by the second network device to process the second request message. The time required by the second network device to process the second request message refers to duration required by the second network device to process the second request message. The time required by the second network device to process the second request message may be predicted by the terminal device, for example, may be predicted by using an AI model and/or a sensing network. Alternatively, the time required by the second network device to process the second request message may be predefined or signaling-configured.

Further, when determining the target second time-frequency resource, the terminal device may further consider whether the second time-frequency resource is occupied, for example, whether the second time-frequency resource is configured to transmit other data or signaling.

Optionally, when the second request message includes the fifth time point, the second network device may determine, based on the fifth time point in the second request message, a sixth time point at which the second connection is released. In other words, the second network device may determine, based on the fifth time point, a moment (the sixth time point) at which data stops to be sent to the terminal device through the second connection. It may be understood that the sixth time point may be earlier than or equal to the fifth time point.

Alternatively, the second network device may determine, based on a time at which the second request message is received, a time at which the second connection is released. For example, after receiving the second request message for a specific period of time, the second network device may release the second connection.

Alternatively, when the terminal device does not send the second request message to the second network device, the second network device may determine, based on the interruption time that is of the first connection in the first request message and that is indicated by the first time information, a seventh time point at which the second connection is released. For example, if the first time information indicates that an end moment of the interruption time of the first connection is a slot 4, to ensure that data transmission is not interrupted, the second network device may release the second connection in a slot 5, that is, the seventh time point is the slot 5.

Optionally, the second network device may send a second confirmation message to the terminal device, where the second confirmation message indicates that the second network device agrees to release the second connection. The second confirmation message may be a response message of the second request message, or may be an indication message actively sent by the second network device (for example, after determining, based on the interruption time of the first connection, the seventh time point at which the second connection is released, the second network device may send the second confirmation message to the terminal device to indicate that the second network device releases the second connection at the seventh time point). After receiving the second confirmation message, the terminal device may release the second connection. Further, if the second confirmation message is the response message of the second request message, and the second request message includes the fifth time point, the second network device may determine, based on the fifth time point, a moment at which the second confirmation message is sent to the terminal device.

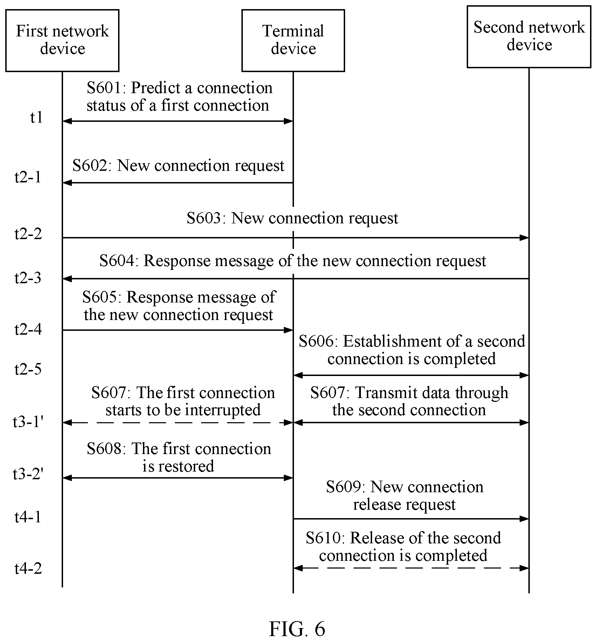

For ease of understanding, the following describes an example connection control method provided in an embodiment of this application with reference to an interaction diagram shown in FIG. 6. As shown in FIG. 6, the connection control method includes S601 to S610.

S601: Predict, at a moment 1 (t1), a connection status of a first connection to a first network device, and predict that the first connection is interrupted at a moment 3-1 (t3-1) to a moment 3-2 (t3-2).

S602: At a moment 2-1 (t2-1), a terminal device sends a new connection request (new connection request) to the first network device, where the message is a first request message, and includes first time information and/or a first time point, the first time information indicates t3-1 to t3-2, and the first time point is a moment 2-5 (t2-5).

S603: At a moment 2-2 (t2-2), the first network device forwards the new connection request (forward the new connection request) to a second network device.

S604: At a moment 2-3 (t2-3), the second network device sends a response message of the new connection request, that is, a first confirmation message, to the first network device.

S605: At a moment 2-4 (t2-4), the first network device forwards the response message of the new connection request to the terminal device.

In S603 to S605, t2-2, t2-3, and t2-4 may be determined by the first network device and the second network device based on the first time point.

S606: At t2-5, establishment of a second connection between the terminal device and the second network device is completed.

S607: At t3-1', the first connection starts to be interrupted, and the terminal device transmits data to the second network device through the second connection. t3-1' and t3-1 may be same moments, or may be different moments.

S608: At t3-2', the first connection is restored. t3-2' and t3-2 may be same moments, or may be different moments.

S609: At a moment 4-1 (t4-1), the terminal device sends a new connection release request (new connection release request), that is, a second request message, to the second network device.

S610: At a moment 4-2 (t4-2), release of the second connection is completed.

For specific implementations of S601 to S610, refer to the foregoing descriptions of S501 to S505. Details are not described herein again.

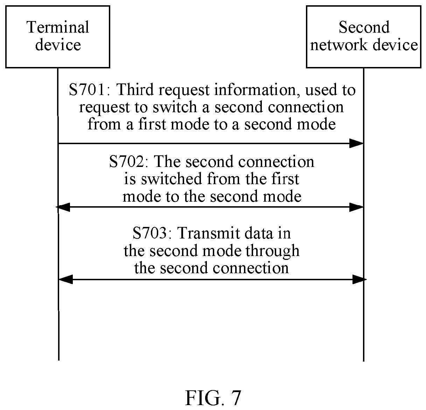

FIG. 7 shows another connection control method provided in an embodiment of this application. In FIG. 7, an example in which a second network device and a terminal device are used as execution bodies of an interaction diagram is used to illustrate the method. However, the execution bodies of the interaction diagram are not limited in this application. For example, the terminal device in FIG. 7 may also be a chip, a chip system, or a processor that supports the terminal device in implementing the method, or may be a logic module or software that can implement all or some functions of the terminal device. The second network device in FIG. 7 may also be a chip, a chip system, or a processor that supports the second network device in implementing the method, or may be a logic module or software that can implement all or some functions of the second network device. The connection control method includes S701 to S703.

S701: The terminal device sends a third request message to the second network device, and correspondingly, the second network device receives the third request message. The third request message is used to request to switch a second connection established with the second network device from a first mode to a second mode, the third request message includes second time information, and the second time information indicates an interruption time of a first connection established between the terminal device and the first network device. Power at which the terminal device works in the second mode is higher than power at which the terminal device works in the first mode

S702: The second connection is switched from the first mode to the second mode.

S703: The terminal device transmits data in the second mode through the second connection.

For S701, in this embodiment of this application, the terminal device establishes the first connection to the first network device. The terminal device may determine, based on a predicted connection status of the first connection, whether to send the third request message to the first network. If it is predicted that the first connection is to be interrupted, the terminal device sends the third request message to the second network device, to request to switch the second connection established with the second network device from the first mode to the second mode. The third request message includes second time information indicating the interruption time of the first connection.

In this embodiment of this application, the power at which the terminal device works in the second mode is higher than the power at which the terminal device works in the first mode. Therefore, the second mode may also be referred to as a normal power mode, and the first mode may be referred to as a power saving mode. The power herein (the power at which the terminal device works in the second mode or the power at which the terminal device works in the first mode) may include power at which the terminal device sends data and/or power at which the terminal device receives data.

In this embodiment of this application, the first mode may be understood as a mode in which power of the terminal device is lower than power in the normal power mode. The power in the normal power mode is power used when the terminal device is in a connected (connected) mode to send uplink data or receive downlink data. The first mode may include a plurality of sub-modes, for example, may include an idle mode, an inactive (inactive) mode, and a connected mode. In the foregoing three modes, the terminal device may periodically enter a sleep mode (sleep mode) at some time according to a discontinuous reception (discontinuous reception, DRX) mechanism configured by a network device, and do not monitor a paging (paging) message or a PDCCH. When monitoring is required, the terminal device wakes up (wake up) from the sleep mode, so that the terminal device achieves an objective of saving power.

In this embodiment of this application, the first connection may maintain the second mode.

It should be noted that, in some scenarios in this embodiment of this application, the third request message may be equivalent to the second time information. In this case, it may be understood as that the third request message includes only the second time information, or the third request message is the second time information. In this case, S701 may be understood as that the terminal device sends the second time information to the second network device, and the second network device learns, based on the second time information, that the terminal device requests to switch the second connection to the second mode.

For the second time information in S701, refer to the foregoing description of the first time information in S501. Details are not described herein again.

It should be noted that, in S701, the interruption time of the first connection may be a time at which a probability that the first connection is interrupted is greater than or equal to a fourth preset threshold. The fourth preset threshold may be the same as or different from the second preset threshold in S501.

Optionally, the terminal device may further send the second time information to the first network device, and the first network device may determine the interruption time of the first connection based on the second time information. Further, the first network device may perform, based on the second time information, different behaviors within the interruption time of the first connection: stopping sending data to the terminal device through the first connection, or still sending data to the terminal device through the first connection.

For how to predict the connection status of the first connection in S701, refer to the foregoing description of how to predict the connection status of the first connection in S501. Details are not described herein again.

It should be noted that, if the connection status of the first connection is predicted based on an AI model and/or a sensing network, to determine the second time information, optionally, a condition that the terminal device sends the third request message to the second network device may include: accuracy of the AI model and/or the sensing network is greater than or equal to a third preset threshold. The third preset threshold may be the same as or different from the first preset threshold in S501.

Optionally, the third request message may further include an eighth time point, and the eighth time point is a moment, expected by the terminal device, at which the second connection is switched to the second mode (a moment at which switching is completed). Optionally, to ensure normal data transmission, the eighth time point may be earlier than or equal to the start moment of the interruption time of the first connection. The second network device may learn, based on the third request message, a moment, expected by the terminal device, at which the second connection is switched to the first mode. Details are described below when S702 is described, and details are not described herein.

The following describes how the terminal device sends the third request message to the second network device.

In a possible implementation, the terminal device may determine a target third time-frequency resource from one or more predefined or signaling-configured third time-frequency resources, and send the third request message to the second network device via the target third time-frequency resource.

Optionally, the terminal device may determine the target third time-frequency resource from the one or more predefined or signaling-configured third time-frequency resources based on the eighth time point and/or a time required by the second network device to process the third request message. The time required by the second network device to process the third request message is duration required by the second network device to process the third request message. The time required by the third network device to process the third request message may be predicted by the terminal device, for example, may be predicted by using an AI model and/or a sensing network. Alternatively, the time required by the second network device to process the third request message may be predefined or signaling-configured.

When the terminal device determines the target third time-frequency resource based on the eighth time point, a time domain location of the target third time-frequency resource is earlier than the eighth time point.

Further, when determining the target third time-frequency resource, the terminal device may further consider whether the third time-frequency resource is occupied, for example, whether the third time-frequency resource is configured to transmit other data or signaling.

In another possible implementation, the terminal device may send the third request message to the second network device via a resource used to transmit uplink data. For example, the first request message may be carried in a MAC CE.

Optionally, after the terminal device sends the second time information to the second network device, if the predicted interruption time of the first connection is updated, the terminal device may send new second time information to the first network device again, where the new first time information indicates updated interruption time of the first connection. Optionally, if the terminal device further sends the second time information to the first network device, the terminal device may further send the new second time information to the first network device.

For example, the terminal device predicts the connection status of the first connection for the first time, and an obtained interruption time of the first connection is a slot 1 to a slot 5. The terminal device sends, to the first network device and the second network device, second time information indicating that the interruption time of the first connection is the slot 1 to the slot 5. Then, the terminal device predicts the connection status of the first connection again, and an obtained interruption time of the first connection is updated to the slot 1 to a slot 6. The terminal device sends, to the first network device and the second network device again, second time information indicating that the interruption time of the first connection is updated to the slot 1 to the slot 6.

For S702, after the terminal device sends the third request message to the second network device, the terminal device and the second network device may switch the second connection from the first mode to the second mode.

Specifically, both the terminal device side and the second network device side switch the second connection from the first mode to the second mode, so that the second connection is switched from the first mode to the second mode. It may be understood that, on both the terminal device side and the second network device side, the second connection has been switched to the second mode, and this may be referred to as switching completion.

Optionally, after the terminal device sends the third request message to the second network device, if the second network device agrees to switch the second connection to the second mode, the second network device may send a third confirmation message to the terminal device, where the third confirmation message indicates that the second network device agrees to switch the second connection to the second mode. The third confirmation message may also be referred to as a response message of the third request message. After the terminal device receives the second confirmation message, the terminal device switches the second connection from the first mode to the second mode.

Further, when the third request message includes the eighth time point, the second network device may determine, based on the eighth time point, an eleventh time point at which the third confirmation message is sent, and send the third confirmation message to the terminal device at the eleventh time point. It may be understood that the eleventh time point is earlier than the eighth time point. For example, if the eighth time point is a slot whose index is 3, in other words, the terminal device expects that the second connection is switched to the second mode in the slot whose index is 3, after receiving the third request message, the second network device may send, based on the eighth time point, the third confirmation message to the terminal device in a slot whose index is 2.

Optionally, after receiving the third request message, the second network device may not send the third confirmation message to the terminal device, but directly determine, based on the interruption time that is of the first connection and that is indicated by the second time information, a moment at which the second connection is switched to the second mode. For example, if the second time information indicates that the interruption time of the first connection is a slot 2 to a slot 5, after receiving the second time information, the second network device may switch the second connection to the second mode in the slot 2 based on the second time information. Alternatively, when the third request message includes the eighth time point, the second network device may determine, based on the eighth time point, the moment at which the second connection is switched to the second mode. For example, the eighth time point may be directly used as the moment at which the second connection is switched to the second mode, or a time point that is before the eighth time point and that is at a specific interval from the eighth time point is used as the moment at which the second connection is switched to the second mode.

For S703, the terminal device may transmit the data to the second network device through the second connection in the second mode.

According to the connection control method in this embodiment of this application, the terminal device can dynamically control a power mode of the second connection based on the connection status of the first connection. On the basis that data can be normally transmitted without being affected by interruption of the first connection, additional power consumption and an additional delay caused by frequent connection establishment or release can be avoided. In addition, the terminal device actively controls connection mode switching, so that signaling overheads and a delay can be reduced.

Optionally, after S703, the connection control method provided in this embodiment of this application may further include S704.

S704: The terminal device switches the second connection from the second mode to the first mode.

In this embodiment of this application, that the terminal device switches the second connection from the second mode to the first mode may include two cases: S7041 and S7042.

S7041: The terminal device switches the second connection from the second mode to the first mode when the first connection is restored.

In this case, the terminal device may determine, based on the predicted connection status of the first connection, whether to switch the second connection to the first mode. If it is predicted that the first connection is to be restored, the terminal device may switch the second connection from the second mode to the first mode, to reduce power consumption. For how to predict the connection status of the first connection, refer to the foregoing description of S501. Details are not described herein again.

S7042: The terminal device switches the second connection from the second mode to the first mode when the connection status of the second connection meets a second condition.

In this case, the terminal device may determine, based on the connection status of the second connection, whether to switch the second connection to the first mode. For example, the second condition may include that a measurement result of a channel state of the second connection is less than a specific threshold. The measurement result of the channel state of the second connection may be at least one of results of RSRP, RSRQ, an SINR, and an RSSI obtained by measuring different reference signals (for example, a CSI-RS, an SRS, and an SSB).

Optionally, before the terminal device switches the second connection from the second mode to the first mode, the terminal device may send a fourth request message to the second network device, where the fourth request message is used to request to switch the second connection to the first mode. After receiving the fourth request message, the second network device may switch the second connection to the first mode based on the fourth request message.

Optionally, the fourth request message may include a ninth time point, and the ninth time point is a moment, expected by the terminal device, at which the second connection is switched to the first mode (a moment at which switching is completed). Therefore, the second network device may determine, based on the ninth time point in the fourth request message, the moment, expected by the terminal device, at which the second connection is switched to the first mode. Optionally, if the terminal device switches the second connection to the first mode when the first connection is restored, the ninth time point may be determined based on a predicted restoration time of the first connection. For example, if it is predicted that the first connection is restored in a slot 2, to ensure normal data transmission, the moment, expected by the terminal device, at which the second connection is switched to the first mode may be a slot 3, that is, the ninth time point may be the slot 3.

The following describes how the terminal device sends the fourth request message to the second network device.

In a possible implementation, the terminal device may determine a target fourth time-frequency resource from one or more pre-configured fourth time-frequency resources, and send the fourth request message to the second network device via the target fourth time-frequency resource.

Optionally, the terminal device may determine the target fourth time-frequency resource from the one or more predefined or signaling-configured fourth time-frequency resources based on the ninth time point and/or a time required by the second network device to process the fourth request message. The time required by the second network device to process the fourth request message refers to duration required by the second network device to process the fourth request message. The time required by the second network device to process the fourth request message may be predicted by the terminal device, for example, may be predicted by using an AI model and/or a sensing network. Alternatively, the time required by the second network device to process the fourth request message may be predefined or signaling-configured.

Further, when determining the target fourth time-frequency resource, the terminal device may further consider whether the fourth time-frequency resource is occupied, for example, whether the fourth time-frequency resource is configured to transmit other data or signaling.

Optionally, when the fourth request message includes the ninth time point, the second network device may determine, based on the ninth time point in the fourth request message, a twelfth time point at which the second connection is switched to the first mode. It may be understood that the twelfth time point may be earlier than or equal to the ninth time point.

Alternatively, the second network device may determine, based on a time at which the fourth request message is received, a time at which the second connection is switched to the first mode. For example, after receiving the fourth request message for a specific period of time, the second network device may switch the second connection to the first mode.

Alternatively, when the terminal device does not send the fourth request message to the second network device, the second network device may determine, based on the interruption time that is of the first connection in the third request message and that is indicated by the second time information, a thirteenth time point at which the second connection is switched to the first mode. For example, if the second time information indicates that an end moment of the interruption time of the first connection is a slot 4, to ensure that data transmission is not interrupted, the second network device may switch the second connection to the first mode in a slot 5, that is, the thirteenth time point is the slot 4.

Optionally, the second network device may send a fourth confirmation message to the terminal device, where the fourth confirmation message indicates that the second network device agrees to switch the second connection to the first mode. The fourth confirmation message may be a response message of the fourth request message, or may be an indication message actively sent by the second network device (for example, after determining, based on the interruption time of the first connection, the thirteenth time point at which the second connection is switched to the first mode, the second network device may send the fourth confirmation message to the terminal device to indicate that the second network device switches the second connection to the first mode at the thirteenth time point). After receiving the fourth confirmation message, the terminal device may switch the second connection to the first mode. Further, if the fourth confirmation message is the response message of the fourth request message, and the fourth request message includes the ninth time point, the second network device may determine, based on the ninth time point, a moment at which the fourth confirmation message is sent to the terminal device.

Further, the fourth confirmation message may include information used to switch the second connection to the first mode. For example, the fourth confirmation message may include configuration information indicating to switch the first mode, for example, information indicating to switch a sub-mode of the first mode, information indicating whether a PDCCH needs to be monitored, and information indicating a period of monitoring the PDCCH.

Optionally, the embodiment shown in FIG. 5 may be combined with S704. Specifically, the terminal device establishes the first connection in the second mode to the first network device. The connection status of the first connection may be predicted. If it is predicted that the first connection is to be interrupted, the terminal device may send a request message to the second network device by using the first network device, where the request message requests to establish the second connection in the second mode to the second network device. After receiving the request message, the second network device establishes the second connection in the second mode to the terminal device. Then, if it is predicted that the first connection is to be restored, or the connection status of the second connection meets a specific condition, the terminal device and the second network device may switch the second connection from the second mode to the first mode. For specific implementation of this solution, refer to the foregoing descriptions of S501 to S504 and S701 to S704. Details are not described herein again. Based on this solution, the terminal device may dynamically control connection establishment and power mode switching of the connection, so that power consumption can be reduced and resources can be saved while data transmission is not interrupted.

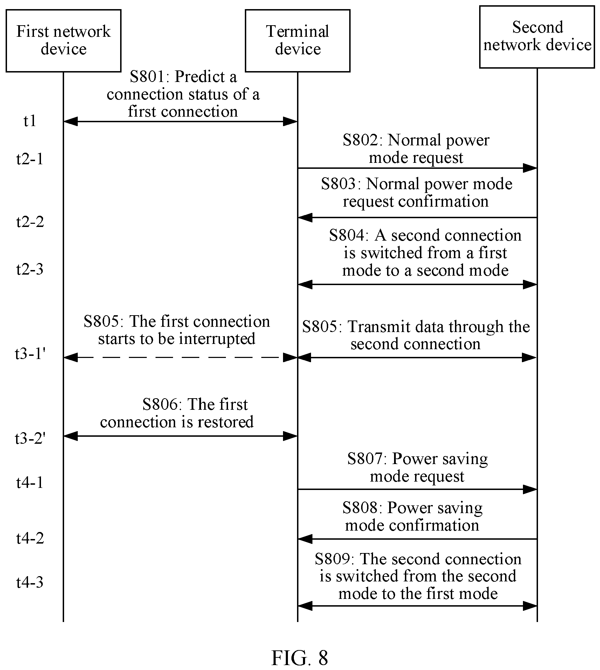

For ease of understanding, the following describes an example connection control method provided in an embodiment of this application with reference to an interaction diagram shown in FIG. 8. As shown in FIG. 8, the connection control method includes S801 to S809.

S801: At a moment 1 (t1), a terminal device maintains a normal power mode (normal power mode), namely, a first connection in a second mode, to a first network device, and maintains a power saving mode (power saving mode), namely, a second connection in a first mode, to a second network device. A connection status of the first connection to the first network device is predicted, and it is predicted that the first connection is interrupted from a moment 3-1 (t3-1) to a moment t3-2 (t3-2).

S802: At a moment 2-1 (t2-1), the terminal device sends a normal power mode request (new connection request) to the second network device, where the message is a third request message, and includes second time information and/or an eighth time point, the second time information indicates t3-1 to t3-2, and the eighth time point is a moment 2-3 (t2-3).

S803: At a moment 2-2 (t2-2), the second network device sends a normal power mode request confirmation (normal power mode request confirmation), that is, a third confirmation message, to the terminal device.

S804: At a moment 2-3 (t2-3), the second connection between the terminal device and the second network device is switched from the first mode to the second mode.

S805: At t3-1', the first connection starts to be interrupted, and the terminal device transmits data to the second network device through the second connection in the second mode. t3-1' and t3-1 may be same moments, or may be different moments.

S806: At t3-2', the first connection is restored. t3-2' and t3-2 may be same moments, or may be different moments.

S807: At a moment 4-1 (t4-1), the terminal device sends a power saving mode request (power saving mode request), that is, a fourth request message, to the second network device.

S808: At a moment 4-2 (t4-2), the second network device sends a power saving mode confirmation (power saving mode confirmation), that is, a fourth confirmation message, to the terminal device.

S809: At a moment 4-3 (t4-3), the second connection between the terminal device and the second network device is switched from the second mode to the first mode.

For specific implementations of S801 to S809, refer to the foregoing descriptions of S701 to S704. Details are not described herein again.

Optionally, after S703, the connection control method provided in this embodiment of this application may further include S705.

S705: The terminal device sends the fourth request message to the second network device, where the fourth request message is used to request to switch the second connection to the first mode. The terminal device establishes a third connection to a third network device when the terminal device receives no response message of the fourth request message within first preset duration. A mode of the third connection may be the first mode or the second mode.

It may be understood that if S705 is performed after S701, the procedure described in S704 is not performed.

Based on the connection control method provided in this embodiment of this application, a new connection can be established to another network device when there is no response to the request message sent to the network device. In other words, when the original connection cannot work normally, the terminal device can establish the new connection to implement a function of the original connection, to ensure normal data transmission.

Optionally, before the terminal device establishes the third connection to the third network device, the terminal device may send a fifth request message to the first network device, where the fifth request message is used to request to establish the third connection to the third network device. After receiving the fifth request message, the first network device sends a second request message to the third network device, so that the third network device learns that the terminal device requests to establish the third connection.

Optionally, the fifth request message may include a tenth time point, and the tenth time point is a moment, expected by the terminal device, at which establishment of the third connection is completed.

Further, when the fifth request message includes the tenth time point, the first network device may determine, based on the tenth time point, the moment, expected by the terminal device, at which establishment of the third connection is completed, to determine a time point at which the fifth request message is sent to the third network device. Alternatively, the first network device may determine, based on a time at which the fifth request message is received, a time at which the fifth request message is sent to the third network device.

Optionally, the fifth request message may include indication information indicating the mode of the third connection. The third network device may determine, based on the indication information, whether the third connection in the first mode or the third connection in the second mode needs to be established.

For the fifth request message, refer to the foregoing description of the first request message in S501. Details are not described herein again.

The following describes how the terminal device sends the fifth request message to the first network device.

In a possible implementation, the terminal device may determine a target fifth time-frequency resource from one or more predefined or signaling-configured fifth time-frequency resources, and send the fifth request message to the first network device via the target fifth time-frequency resource. Further, the terminal device may determine the target fifth time-frequency resource from the one or more predefined or signaling-configured fifth time-frequency resources based on the tenth time point and/or a time required by the first network device to process the fifth request message. For specific implementation of this solution, refer to the foregoing description of S501 in which the terminal device sends the first request message to the first network device via the target first time-frequency resource. Details are not described herein again.

Optionally, if the third network device agrees to establish the third connection to the terminal device, the third network device may send a fifth confirmation message to the terminal device by using the first network device. The fifth confirmation message indicates that the third network device agrees to establish the third connection. For the fifth confirmation message, refer to the foregoing description of the first confirmation message in S502. Details are not described herein again.

Further, when the fifth request message includes the tenth time point, the third network device may determine, based on the tenth time point, a moment at which the fifth confirmation message is sent. It may be understood that the moment at which the fifth confirmation message is sent is earlier than the tenth time point. For example, if the tenth time point is a slot whose index is 3, in other words, the terminal device expects that establishment of the third connection is completed in the slot whose index is 3, after receiving the fifth request message, the third network device may send, based on the tenth time point, the fifth confirmation message to the terminal device in a slot whose index is 2.

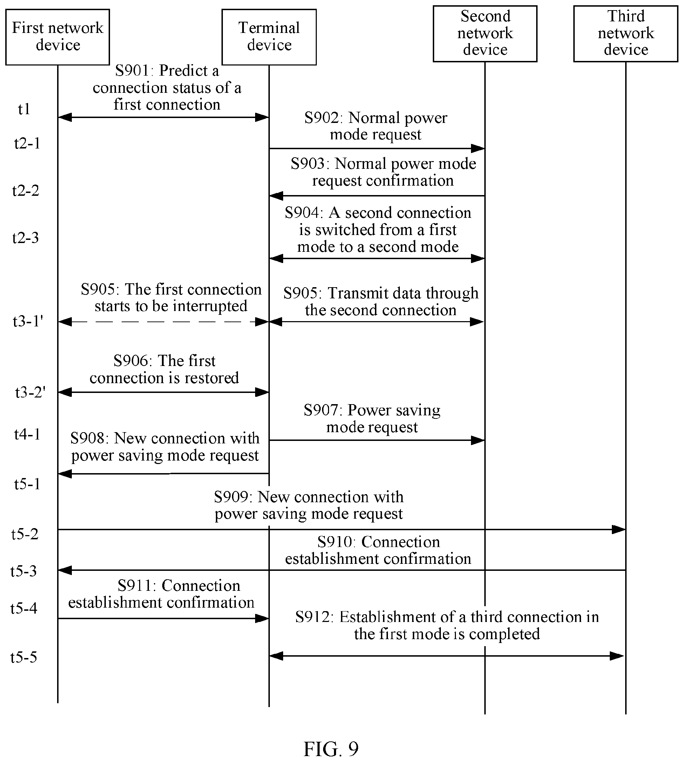

For ease of understanding, the following describes an example connection control method provided in an embodiment of this application with reference to an interaction diagram shown in FIG. 9. As shown in FIG. 9, the connection control method includes S901 to S912.

S901: At a moment 1 (t1), a terminal device maintains a normal power mode (normal power mode), namely, a first connection in a second mode, to a first network device, and maintains a power saving mode (power saving mode), namely, a second connection in a first mode, to a second network device. A connection status of the first connection to the first network device is predicted, and it is predicted that the first connection is interrupted from a moment 3-1 (t3-1) to a moment t3-2 (t3-2).

S902: At a moment 2-1 (t2-1), the terminal device sends a normal power mode request (normal power mode request) to the second network device, where the message is a third request message, and includes second time information and/or an eighth time point, the second time information indicates t3-1 to t3-2, and the eighth time point is a moment 2-3 (t2-3).

S903: At a moment 2-2 (t2-2), the second network device sends a normal power mode request confirmation (normal power mode request confirmation), that is, a third confirmation message, to the terminal device.

S904: At a moment 2-3 (t2-3), the second connection between the terminal device and the second network device is switched from the first mode to the second mode.

S905: At t3-1', the first connection starts to be interrupted, and the terminal device transmits data to the second network device through the second connection in the second mode. t3-1' and t3-1 may be same moments, or may be different moments.

S906: At t3-2', the first connection is restored. t3-2' and t3-2 may be same moments, or may be different moments.

S907: At a moment 4-1 (t4-1), the terminal device sends a power saving mode request (power saving mode request), that is, a fourth request message, to the second network device. The terminal device receives no response message of the power saving mode request within first preset duration.

S908: At a moment 5-1 (t5-1), the terminal device sends a new connection with power saving mode request (new connection with power saving mode request) to the first network device, where the message is a fifth request message, and includes a tenth time point, and the tenth time point is a moment 5-5 (t5-5).

S909: At a moment 5-2 (t5-2), the first network device forwards the new connection with power saving mode request to a third network device.

S910: At a moment 5-3 (t5-3), the third network device sends a response message of the new connection with power saving mode request to the first network device: a connection establishment confirmation (connection establishing confirmation), that is, a fifth confirmation message.

S911: At a moment 5-4 (t5-4), the first network device forwards the connection establishment confirmation message to the terminal device.

In S909 to S911, t5-2, t5-3, and t5-4 may be determined by the first network device and the third network device based on the tenth time point.

S912: At a moment 5-5 (t5-5), establishment of a third connection in the first mode between the terminal device and the third network device is completed.

For specific implementations of S901 to S912, refer to the foregoing descriptions of S701 to S703 and S705. Details are not described herein again.

Optionally, after S701, the connection control method provided in this embodiment of this application may further include S706.

S706: The terminal device sends the third request message to the second network device, where the third request message is used to request to switch the second connection to the second mode. The terminal device establishes the third connection to the third network device when the terminal device receives no response message of the third request message within third preset duration. A mode of the third connection may be the first mode or the second mode.

It may be understood that if S706 is performed after S701, the procedures described in S702, S703, and S704 are not performed.

Based on the connection control method provided in this embodiment of this application, a new connection can be established to another network device when there is no response to the request message sent to the network device. In other words, when the original connection cannot work normally, the terminal device can establish the new connection to implement a function of the original connection, to ensure normal data transmission.

For specific implementations of S706, refer to the foregoing descriptions of S705. Details are not described herein again. The third preset duration may be the same as or different from the first preset duration. This is not limited in embodiments of this application.

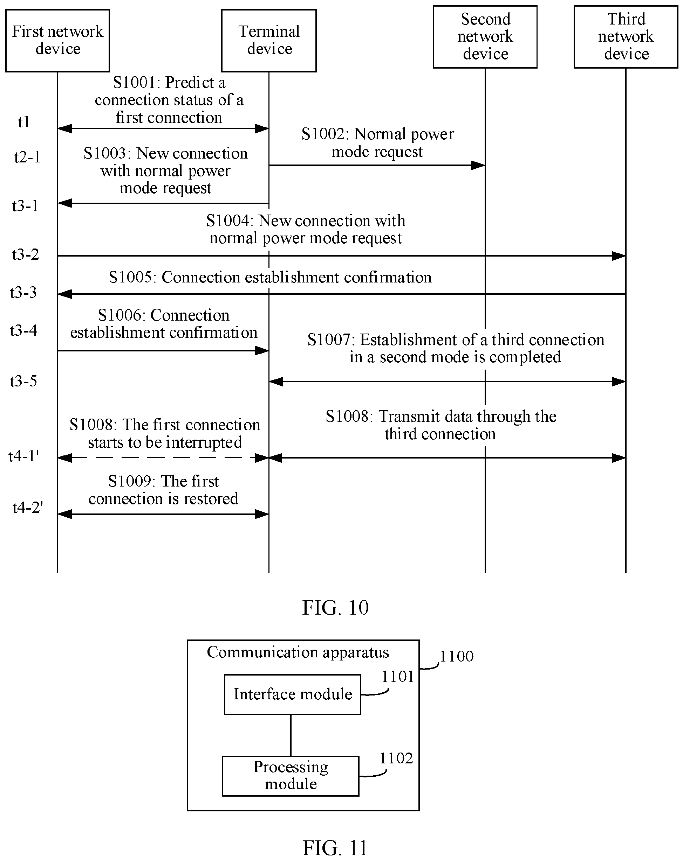

For ease of understanding, the following describes an example connection control method provided in an embodiment of this application with reference to an interaction diagram shown in FIG. 10. As shown in FIG. 10, the connection control method includes S1001 to S1009.

S1001: At a moment 1 (t1), a terminal device maintains a normal power mode (normal power mode), namely, a first connection in a second mode, to a first network device, and maintains a power saving mode (power saving mode), namely, a second connection in a first mode, to a second network device. A connection status of the first connection to the first network device is predicted, and it is predicted that the first connection is interrupted from a moment 4-1 (t4-1) to a moment t4-2 (t4-2).

S1002: At a moment 2-1 (t2-1), the terminal device sends a normal power mode request (normal power mode request) to the second network device, where the message is a third request message, and includes second time information and/or an eighth time point, the second time information indicates t4-1 to t4-2, and the eighth time point is a moment 4-3 (t4-3). The terminal device receives no response message of the normal power mode request within third preset duration.

S1003: At a moment 3-1 (t3-1), the terminal device sends a new connection with power normal power mode request (new connection with normal power mode request) to the first network device, where the message is a fifth request message, and includes a tenth time point, and the tenth time point is a moment 3-5 (t3-5).

S1004: At a moment 3-2 (t3-2), the first network device forwards the new connection with normal power mode request to a third network device.

S1005: At a moment 3-3 (t3-3), the third network device sends a response message of the new connection with normal power mode request to the first network device: a connection establishment confirmation (connection establishing confirmation), that is, a fifth confirmation message.

S1006: At a moment 3-4 (t3-4), the first network device forwards the connection establishment confirmation to the terminal device.

In S1004 to S1006, t3-2, t3-3, and t3-4 may be determined by the first network device and the third network device based on the tenth time point.

S1007: At a moment 3-5 (t3-5), establishment of a third connection in the second mode between the terminal device and the third network device is completed.

S1008: At t4-1', the first connection starts to be interrupted, and the terminal device transmits data to the third network device through the third connection in the second mode. t4-1' and t4-1 may be same moments, or may be different moments.

S1009: At t4-2', the first connection is restored. t4-2' and t4-2 may be same moments, or may be different moments.

For specific implementations of S1001 to S1009, refer to the foregoing descriptions of S701 and S706. Details are not described herein again.

It may be understood that in the foregoing embodiments, methods and/or steps implemented by a terminal device may alternatively be implemented by a component (for example, a chip or a circuit) that can be used in the terminal device. Methods and/or steps implemented by a network device (including a first network device, a second network device, or a third network device) may also be implemented by a component (for example, a chip or a circuit) that can be used in the network device.

The foregoing mainly describes the solutions provided in embodiments of this application from the perspective of interaction between devices. Correspondingly, an embodiment of this application further provides a communication apparatus, and the communication apparatus is configured to implement the foregoing methods. The communication apparatus may be the terminal device in the foregoing method embodiment, or an apparatus including the foregoing terminal device, or a component applicable to the terminal device. Alternatively, the communication apparatus may be the network device in the foregoing method embodiment, or an apparatus including the foregoing network device, or a component applicable to the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented through hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the terminal device in the foregoing method embodiment. FIG. 11 is a diagram of a structure of a communication apparatus 1100. The communication apparatus 1100 includes an interface module 1101 and a processing module 1102. The interface module 1101 may alternatively be referred to as a transceiver module or a transceiver unit. The interface module 1101 is configured to implement a transceiver function. For example, the interface module may be a transceiver circuit, a transceiver machine, a transceiver, or a communication interface.

In a possible design, the interface module 1101 is configured to send a first request message to a first network device, where the first request message is used to request to establish a second connection to a second network device; the first request message includes first time information; and the first time information indicates an interruption time of a first connection established between the terminal device and the first network device. The processing module 1102 is configured to establish the second connection to the second network device. The processing module 1102 is further configured to transmit data through the second connection.

In a possible design, the first request message further includes a first time point, and the first time point is a moment, expected by the terminal device, at which establishment of the second connection is completed.

In a possible design, the processing module 1102 is further configured to determine a target first time-frequency resource from one or more preconfigured first time-frequency resources. The interface module 1101 is specifically configured to send the first request message to the first network device via the target first time-frequency resource.

In a possible design, the processing module 1102 is specifically configured to determine the target first time-frequency resource from the one or more preconfigured first time-frequency resources based on the first time point and/or a time required by the first network device to process the first request message, where the first time point is the moment, expected by the terminal device, at which establishment of the second connection is completed.

In a possible design, the interface module 1101 is further configured to receive a first confirmation message from the first network device, where the first confirmation message indicates that the second network device agrees to establish the second connection to the terminal device.

In a possible design, the processing module 1102 is further configured to: release the second connection when the first connection is restored or when a connection status of the second connection meets a first condition.

In a possible design, the first time information is determined based on an artificial intelligence AI model and/or a sensing network.

In a possible design, the interface module 1101 is specifically configured to send the first request message to the first network device when accuracy of the AI model and/or the sensing network is greater than or equal to a first preset threshold.

In a possible design, the interruption time of the first connection is a time at which a probability that the first connection is interrupted is greater than or equal to a second preset threshold.

In this embodiment, the communication apparatus 1100 is presented in a form of functional modules obtained through integration. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1100 may be in a form of the terminal device shown in FIG. 3.

For example, the processor 1001 in the terminal device shown in FIG. 3 may invoke the computer-executable instructions stored in the memory 1002, to enable the terminal device to perform the connection control method in the foregoing method embodiment. Specifically, functions/implementation processes of the interface module 1101 and the processing module 1102 in FIG. 11 may be implemented through the processor 1001 in the terminal device shown in FIG. 3 by invoking the computer-executable instructions stored in the memory 1002. Alternatively, a function/implementation process of the processing module 1102 in FIG. 11 may be implemented through the processor 1001 in the terminal device shown in FIG. 3 by invoking the computer-executable instructions stored in the memory 1002. A function/implementation process of the interface module 1101 in FIG. 11 may be implemented through the transceiver 1003 in the terminal device shown in FIG. 3.

The communication apparatus 1100 provided in this embodiment may perform the foregoing connection control method. Therefore, for technical effect that can be achieved by the communication apparatus, refer to the foregoing method embodiments. Details are not described herein again.

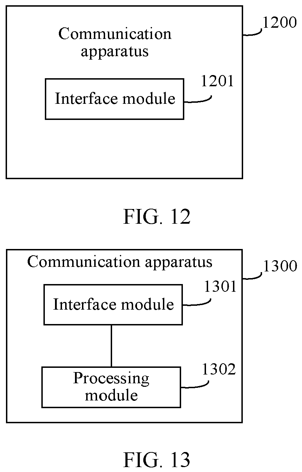

For example, the communication apparatus is the first network device in the foregoing method embodiment. FIG. 12 is a diagram of a structure of a communication apparatus 1200. The communication apparatus 1200 includes an interface module 1201. The interface module 1201 may alternatively be referred to as a transceiver module. The interface module 1201 is configured to implement a transceiver function. For example, the interface module may be a transceiver circuit, a transceiver machine, a transceiver, or a communication interface.

In a possible design, the interface module 1201 is configured to receive a first request message from a terminal device, where the first request message is used to request to establish a second connection to a second network device; the first request message includes first time information; and the first time information indicates an interruption time of a first connection established between the terminal device and the first network device. The interface module 1201 is further configured to send the first request message to the second network device.

In a possible design, the first request message further includes a first time point, and the first time point is a moment, expected by the terminal device, at which establishment of the second connection is completed.

In a possible design, the interface module 1201 is specifically configured to send the first request message to the second network device at a second time point, where the second time point is determined based on the first time point.

In a possible design, the interface module 1201 is further configured to receive a first confirmation message from the second network device, where the first confirmation message indicates that the second network device agrees to establish the second connection to the terminal device. The interface module 1201 is further configured to send the first confirmation message to the terminal device.

In a possible design, the first request message further includes the first time point, and the first time point is the moment, expected by the terminal device, at which establishment of the second connection is completed. The interface module 1201 is specifically configured to send the first confirmation message to the terminal device at a third time point, where the third time point is determined based on the first time point.

In a possible design, the interface module 1201 is specifically configured to: stop sending data to the terminal device based on the first time information within the interruption time of the first connection; or send data to the terminal device based on the first time information within the interruption time of the first connection.

In a possible design, the first time information is determined based on an artificial intelligence AI model and/or a sensing network.

In a possible design, the interruption time of the first connection is a time at which a probability that the first connection is interrupted is greater than or equal to a second preset threshold.

In this embodiment, the communication apparatus 1200 is presented in a form of functional modules obtained through integration. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1200 may be in a form of the network device shown in FIG. 3.

For example, the processor 901 in the network device shown in FIG. 3 may invoke the computer-executable instructions stored in the memory 902, to enable the network device to perform the connection control method in the foregoing method embodiment. Specifically, a function/implementation process of the interface module 1201 in FIG. 12 may be implemented through the processor 901 in the network device shown in FIG. 3 by invoking the computer-executable instructions stored in the memory 902. Alternatively, a function/implementation process of the interface module 1201 in FIG. 12 may be implemented through the transceiver 903 in the network device shown in FIG. 3.

The communication apparatus 1200 provided in this embodiment may perform the foregoing connection control method. Therefore, for technical effect that can be achieved by the communication apparatus, refer to the foregoing method embodiments. Details are not described herein again.

For example, the communication apparatus is the second network device in the foregoing method embodiment. FIG. 13 is a diagram of a structure of a communication apparatus 1300. The communication apparatus 1300 includes an interface module 1301 and a processing module 1302. The interface module 1301 may alternatively be referred to as a transceiver module or a transceiver unit. The interface module 1301 is configured to implement a transceiver function. For example, the interface module may be a transceiver circuit, a transceiver machine, a transceiver, or a communication interface.

In a possible design, the interface module 1301 is configured to receive a first request message from a first network device, where the first request message is used to request a second network device to establish a second connection to a terminal device; the first request message includes first time information; and the first time information indicates an interruption time of a first connection established between the terminal device and the first network device. The processing module 1302 is configured to establish the second connection to the terminal device. The processing module 1302 is further configured to transmit data with the terminal device through the second connection.

In a possible design, the interface module 1301 is further configured to send a first confirmation message to the first network device, where the first confirmation message indicates that the second network device agrees to establish the second connection to the terminal device.

In a possible design, the first request message further includes a first time point, and the first time point is a moment, expected by the terminal device, at which establishment of the second connection is completed. The interface module 1301 is specifically configured to send the first confirmation message to the first network device at a fourth time point, where the fourth time point is determined based on the first time point.

In a possible design, the processing module 1302 is further configured to release the second connection.

In a possible design, the interface module 1301 is further configured to receive a second request message from the terminal device, where the second request message is used to request to release the second connection.

In a possible design, the second request message includes a fifth time point, and the fifth time point is a moment, expected by the terminal device, at which release of the second connection is completed; and the processing module 1302 is specifically configured to release the second connection at a sixth time point, where the sixth time point is determined based on the fifth time point.

In a possible design, the processing module 1302 is specifically configured to release the second connection at a seventh time point, where the seventh time point is determined based on the interruption time of the first connection.

In a possible design, the first time information is determined based on an artificial intelligence AI model and/or a sensing network.

In a possible design, the interruption time of the first connection is a time at which a probability that the first connection is interrupted is greater than or equal to a second preset threshold.

In this embodiment, the communication apparatus 1300 is presented in a form of functional modules obtained through integration. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 1300 may be in a form of the network device shown in FIG. 3.

For example, the processor 901 in the network device shown in FIG. 3 may invoke the computer-executable instructions stored in the memory 902, to enable the network device to perform the connection control method in the foregoing method embodiment. Specifically, functions/implementation processes of the interface module 1301 and the processing module 1302 in FIG. 13 may be implemented through the processor 901 in the network device shown in FIG. 3 by invoking the computer-executable instructions stored in the memory 902. Alternatively, a function/implementation process of the processing module 1302 in FIG. 13 may be implemented through the processor 901 in the network device shown in FIG. 3 by invoking the computer-executable instructions stored in the memory 902. A function/implementation process of the interface module 1301 in FIG. 13 may be implemented through the transceiver 903 in the network device shown in FIG. 3.

The communication apparatus 1300 provided in this embodiment may perform the foregoing connection control method. Therefore, for technical effect that can be achieved by the communication apparatus, refer to the foregoing method embodiments. Details are not described herein again.

It should be noted that one or more of the foregoing modules or units may be implemented through software, hardware, or a combination thereof. When any one of the foregoing modules or units is implemented through software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface. The at least one processor is coupled to a memory through an interface. When the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented through software, hardware, firmware, or any combination thereof. When a software program is used to implement embodiments, embodiments may be implemented completely or partially in a form of a computer program product.

This application provides a computer program product, including one or more computer instructions. When the computer instructions are run on a communication apparatus, any method in embodiments of this application is performed.

When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

## Claims

1. A connection control method, wherein the method comprises:
sending, by a terminal device, a first request message to a first network device, wherein the first request message is used to request to establish a second connection to a second network device; the first request message comprises first time information; and the first time information indicates an interruption time of a first connection established between the terminal device and the first network device;
establishing, by the terminal device, the second connection to the second network device; and
transmitting, by the terminal device, data through the second connection.

2. The method according to claim 1, wherein the first request message further comprises a first time point, and the first time point is a moment, expected by the terminal device, at which establishment of the second connection is completed.

3. The method according to claim 1 or 2, wherein before the sending, by a terminal device, a first request message to a first network device, the method further comprises:
determining, by the terminal device, a target first time-frequency resource from one or more preconfigured first time-frequency resources; and
the sending, by a terminal device, a first request message to a first network device comprises:
sending, by the terminal device, the first request message to the first network device via the target first time-frequency resource.

4. The method according to claim 3, wherein the determining, by the terminal device, a target first time-frequency resource from one or more preconfigured first time-frequency resources comprises:
determining, by the terminal device, the target first time-frequency resource from the one or more preconfigured first time-frequency resources based on the first time point and/or a time required by the first network device to process the first request message, wherein the first time point is the moment, expected by the terminal device, at which establishment of the second connection is completed.

5. The method according to any one of claims 1 to 4, wherein before the establishing, by the terminal device, the second connection to the second network device, the method further comprises:
receiving, by the terminal device, a first confirmation message from the first network device, wherein the first confirmation message indicates that the second network device agrees to establish the second connection to the terminal device.

6. The method according to any one of claims 1 to 5, wherein the method further comprises:
releasing, by the terminal device, the second connection when the first connection is restored; or
releasing, by the terminal device, the second connection when a connection status of the second connection meets a first condition.

7. The method according to any one of claims 1 to 6, wherein the first time information is determined based on an artificial intelligence AI model and/or a sensing network.

8. The method according to claim 7, wherein the sending, by a terminal device, a first request message to a first network device comprises:
sending, by the terminal device, the first request message to the first network device when accuracy of the AI model and/or the sensing network is greater than or equal to a first preset threshold.

9. The method according to any one of claims 1 to 8, wherein the interruption time of the first connection is a time at which a probability that the first connection is interrupted is greater than or equal to a second preset threshold.

10. A connection control method, wherein the method comprises:
receiving, by a first network device, a first request message from a terminal device, wherein the first request message is used to request to establish a second connection to a second network device; the first request message comprises first time information; and the first time information indicates an interruption time of a first connection established between the terminal device and the first network device; and
sending, by the first network device, the first request message to the second network device.

11. The method according to claim 10, wherein the first request message further comprises a first time point, and the first time point is a moment, expected by the terminal device, at which establishment of the second connection is completed.

12. The method according to claim 11, wherein the sending, by the first network device, the first request message to the second network device comprises:
sending, by the first network device, the first request message to the second network device at a second time point, wherein the second time point is determined based on the first time point.

13. The method according to any one of claims 10 to 12, wherein the method further comprises:
receiving, by the first network device, a first confirmation message from the second network device, wherein the first confirmation message indicates that the second network device agrees to establish the second connection to the terminal device; and
sending, by the first network device, the first confirmation message to the terminal device.

14. The method according to claim 13, wherein the first request message further comprises the first time point, and the first time point is the moment, expected by the terminal device, at which establishment of the second connection is completed; and the sending, by the first network device, the first confirmation message to the terminal device comprises:
sending, by the first network device, the first confirmation message to the terminal device at a third time point, wherein the third time point is determined based on the first time point.

15. The method according to any one of claims 10 to 14, wherein the method further comprises:
stopping, by the first network device, sending data to the terminal device based on the first time information within the interruption time of the first connection; or
sending, by the first network device, data to the terminal device based on the first time information within the interruption time of the first connection.

16. The method according to any one of claims 10 to 15, wherein the first time information is determined based on an artificial intelligence AI model and/or a sensing network.

17. The method according to any one of claims 10 to 16, wherein the interruption time of the first connection is a time at which a probability that the first connection is interrupted is greater than or equal to a second preset threshold.

18. A connection control method, wherein the method comprises:
receiving, by a second network device, a first request message from a first network device, wherein the first request message is used to request the second network device to establish a second connection to a terminal device; the first request message comprises first time information; and the first time information indicates an interruption time of a first connection established between the terminal device and the first network device;
establishing, by the second network device, the second connection to the terminal device; and
transmitting, by the second network device, data with the terminal device through the second connection.

19. The method according to claim 18, wherein before the establishing, by the second network device, the second connection to the terminal device, the method further comprises:
sending, by the second network device, a first confirmation message to the first network device, wherein the first confirmation message indicates that the second network device agrees to establish the second connection to the terminal device.

20. The method according to claim 18 or 19, wherein the first request message further comprises a first time point, and the first time point is a moment, expected by the terminal device, at which establishment of the second connection is completed; and the sending, by the second network device, a first confirmation message to the first network device comprises:
sending, by the second network device, the first confirmation message to the first network device at a fourth time point, wherein the fourth time point is determined based on the first time point.

21. The method according to any one of claims 18 to 20, wherein the method further comprises:
releasing, by the second network device, the second connection.

22. The method according to claim 21, wherein before the releasing, by the second network device, the second connection, the method further comprises:
receiving, by the second network device, a second request message from the terminal device, wherein the second request message is used to request to release the second connection.

23. The method according to claim 22, wherein the second request message comprises a fifth time point, and the fifth time point is a moment, expected by the terminal device, at which release of the second connection is completed; and the releasing, by the second network device, the second connection comprises:
releasing, by the second network device, the second connection at a sixth time point, wherein the sixth time point is determined based on the fifth time point.

24. The method according to claim 21, wherein the releasing, by the second network device, the second connection comprises:
releasing, by the second network device, the second connection at a seventh time point, wherein the seventh time point is determined based on the interruption time of the first connection.

25. The method according to any one of claims 18 to 24, wherein the first time information is determined based on an artificial intelligence AI model and/or a sensing network.

26. The method according to any one of claims 18 to 25, wherein the interruption time of the first connection is a time at which a probability that the first connection is interrupted is greater than or equal to a second preset threshold.

27. A connection control method, wherein the method comprises:
sending, by a terminal device, a third request message to a second network device, wherein the third request message is used to request to switch a second connection established with the second network device from a first mode to a second mode; the third request message comprises second time information; the second time information indicates an interruption time of a first connection established between the terminal device and the first network device; and power at which the terminal device works in the second mode is higher than power at which the terminal device works in the first mode;
switching, by the terminal device, the second connection from the first mode to the second mode; and
transmitting, by the terminal device, data in the second mode through the second connection.

28. The method according to claim 27, wherein
the third request message further comprises an eighth time point, and the eighth time point is a moment, expected by the terminal device, at which the second connection is switched to the second mode.

29. The method according to claim 27 or 28, wherein before the sending, by a terminal device, a third request message to a second network device, the method further comprises:
determining, by the terminal device, a target third time-frequency resource from one or more preconfigured third time-frequency resources; and
the sending, by a terminal device, a third request message to a second network device comprises:
sending, by the terminal device, the third request message to the second network device via the target third time-frequency resource.

30. The method according to claim 29, wherein the determining, by the terminal device, a target third time-frequency resource from one or more preconfigured third time-frequency resources comprises:
determining, by the terminal device, the target third time-frequency resource from the one or more preconfigured third time-frequency resources based on the eighth time point and/or a time required by the second network device to process the third request message, wherein the eighth time point is a moment, expected by the terminal device, at which the second connection is switched to the second mode.

31. The method according to any one of claims 27 to 30, wherein before the switching, by the terminal device, the second connection from the first mode to the second mode, the method further comprises:
receiving, by the terminal device, a third confirmation message from the second network device, wherein the third confirmation message indicates that the second network device agrees to switch the second connection to the second mode.

32. The method according to any one of claims 27 to 31, wherein the method further comprises:
switching, by the terminal device, the second connection from the second mode to the first mode when the first connection is restored; or
switching, by the terminal device, the second connection from the second mode to the first mode when a connection status of the second connection meets a second condition.

33. The method according to claim 32, wherein before the switching, by the terminal device, the second connection from the second mode to the first mode, the method further comprises:
sending, by the terminal device, a fourth request message to the second network device, wherein the fourth request message is used to request to switch the second connection to the first mode.

34. The method according to claim 33, wherein the fourth request message comprises a ninth time point, and the ninth time point is a moment, expected by the terminal device, at which the second connection is switched to the first mode.

35. The method according to claim 33 or 34, wherein before the sending, by the terminal device, a fourth request message to the second network device, the method further comprises:
determining, by the terminal device, a target fourth time-frequency resource from one or more preconfigured fourth time-frequency resources; and
the sending, by the terminal device, a fourth request message to the second network device comprises:
sending, by the terminal device, the fourth request message to the second network device via the target fourth time-frequency resource.

36. The method according to claim 35, wherein the determining, by the terminal device, a target fourth time-frequency resource from one or more preconfigured fourth time-frequency resources comprises:
determining, by the terminal device, the target fourth time-frequency resource from the one or more preconfigured fourth time-frequency resources based on the ninth time point and/or a time required by the second network device to process the fourth request message, wherein the ninth time point is a moment, expected by the terminal device, at which the second connection is switched to the first mode.

37. The method according to any one of claims 32 to 36, wherein before the switching, by the terminal device, the second connection from the second mode to the first mode, the method further comprises:
receiving, by the terminal device, a fourth confirmation message from the second network device, wherein the fourth confirmation message indicates that the second network device agrees to switch the second connection to the first mode.

38. The method according to any one of claims 27 to 31, wherein the method further comprises:
sending, by the terminal device, a fourth request message to the second network device, wherein the fourth request message is used to request to switch the second connection to the first mode; and
establishing, by the terminal device, a third connection to a third network device when the terminal device receives no response message of the fourth request message within first preset duration, wherein a mode of the third connection is the first mode.

39. The method according to claim 38, wherein before the establishing, by the terminal device, a third connection to a third network device, the method further comprises:
sending, by the terminal device, a fifth request message to the first network device, wherein the fifth request message is used to request to establish the third connection to the third network device.

40. The method according to claim 39, wherein the fifth request message comprises a tenth time point, and the tenth time point is a moment, expected by the terminal device, at which establishment of the third connection is completed.

41. The method according to claim 39 or 40, wherein before the sending, by the terminal device, a fifth request message to the first network device, the method further comprises:
determining, by the terminal device, a target fifth time-frequency resource from one or more preconfigured fifth time-frequency resources; and
the sending, by the terminal device, a fifth request message to the first network device comprises:
sending, by the terminal device, the fifth request message to the first network device via the target fifth time-frequency resource.

42. The method according to claim 41, wherein the determining, by the terminal device, a target fifth time-frequency resource from one or more preconfigured fifth time-frequency resources comprises:
determining, by the terminal device, the target fifth time-frequency resource from the one or more preconfigured fifth time-frequency resources based on the tenth time point and/or a time required by the third network device to process the fifth request message, wherein the tenth time point is a moment, expected by the terminal device, at which establishment of the third connection is completed.

43. The method according to any one of claims 38 to 42, wherein before the establishing, by the terminal device, a third connection to a third network device, the method further comprises:
receiving, by the terminal device, a fifth confirmation message from the third network device, wherein the fifth confirmation message indicates that the third network device agrees to establish the third connection to the terminal device.

44. The method according to any one of claims 27 to 43, wherein the second time information is determined based on an artificial intelligence AI model and/or a sensing network.

45. The method according to claim 44, wherein the sending, by a terminal device, a third request message to a second network device comprises:
sending, by the terminal device, the third request message to the second network device when accuracy of the AI model and/or the sensing network is greater than or equal to a third preset threshold.

46. The method according to any one of claims 27 to 45, wherein the interruption time of the first connection is a time at which a probability that the first connection is interrupted is greater than or equal to a fourth preset threshold.

47. The method according to any one of claims 27 to 46, wherein a mode of the first connection is the second mode.

48. A connection control method, wherein the method comprises:
receiving, by a second network device, a third request message from a terminal device, wherein the third request message is used to request to switch a second connection established between the terminal device and the second network device from a first mode to a second mode; the third request message comprises second time information; the second time information indicates an interruption time of a first connection established between the terminal device and the first network device; and power at which the terminal device works in the second mode is higher than power at which the terminal device works in the first mode;
switching, by the second network device, the second connection from the first mode to the second mode; and
transmitting, by the second network device, data through the second connection.

49. The method according to claim 48, wherein before the switching, by the second network device, the second connection from the first mode to the second mode, the method further comprises:
sending, by the second network device, a third confirmation message to the terminal device, wherein the third confirmation message indicates that the second network device agrees to switch the second connection to the second mode.

50. The method according to claim 49, wherein the third request message further comprises an eighth time point, and the eighth time point is a moment, expected by the terminal device, at which the second connection is switched to the second mode; and
the sending, by the second network device, a third confirmation message to the terminal device comprises:
sending, by the second network device, the third confirmation message to the terminal device at an eleventh time point, wherein the eleventh time point is determined based on the eighth time point.

51. The method according to any one of claims 48 to 50, wherein the method further comprises:
switching, by the second network device, the second connection from the second mode to the first mode.

52. The method according to claim 51, wherein before the switching, by the second network device, the second connection from the second mode to the first mode, the method further comprises:
receiving, by the second network device, a fourth request message from the terminal device, wherein the fourth request message is used to request to switch the second connection to the first mode.

53. The method according to claim 52, wherein the fourth request message comprises a ninth time point, and the ninth time point is a moment, expected by the terminal device, at which the second connection is switched to the first mode; and
the switching, by the second network device, the second connection from the second mode to the first mode comprises:
switching, by the second network device, the second connection from the second mode to the first mode at a twelfth time point, wherein the twelfth time point is determined based on the ninth time point.

54. The method according to claim 51 or 52, wherein the switching, by the second network device, the second connection from the second mode to the first mode comprises:
switching, by the second network device, the second connection from the second mode to the first mode at a thirteenth time point, wherein the thirteenth time point is determined based on the interruption time of the first connection.

55. The method according to any one of claims 51 to 54, wherein the method further comprises:
sending, by the second network device, a fourth confirmation message to the terminal device, wherein the fourth confirmation message indicates that the second network device agrees to switch the second connection to the first mode.

56. The method according to any one of claims 48 to 55, wherein the second time information is determined based on an artificial intelligence AI model and/or a sensing network.

57. The method according to any one of claims 48 to 56, wherein the interruption time of the first connection is a time at which a probability that the first connection is interrupted is greater than or equal to a fourth preset threshold.

58. The method according to any one of claims 48 to 57, wherein a mode of the first connection is the second mode.

59. A communication apparatus, wherein the apparatus comprises an interface module and a processing module;
the interface module is configured to send a third request message to a second network device, wherein the third request message is used to request to switch a second connection established with the second network device from a first mode to a second mode; the third request message comprises second time information; the second time information indicates an interruption time of a first connection established between the communication apparatus and a first network device; and power at which the communication apparatus works in the second mode is higher than power at which the communication apparatus works in the first mode;
the processing module is configured to switch the second connection from the first mode to the second mode; and
the interface module is further configured to transmit data in the second mode through the second connection.

60. The apparatus according to claim 59, wherein
the third request message further comprises an eighth time point, and the eighth time point is a moment, expected by the communication apparatus, that the second connection is switched to the second mode.

61. The apparatus according to claim 59 or 60, wherein the processing module is further configured to determine a target third time-frequency resource from one or more preconfigured third time-frequency resources; and
that the interface module sends the third request message to the second network device comprises:
the interface module sends the third request message to the second network device via the target third time-frequency resource.

62. The apparatus according to claim 61, wherein that the processing module determines the target third time-frequency resource from the one or more preconfigured third time-frequency resources comprises:
the processing module determines the target third time-frequency resource from the one or more preconfigured third time-frequency resources based on the eighth time point and/or a time required by the second network device to process the third request message, wherein the eighth time point is a moment, expected by the communication apparatus, at which the second connection is switched to the second mode.

63. The apparatus according to any one of claims 59 to 62, wherein the interface module is further configured to receive a third confirmation message from the second network device, wherein the third confirmation message indicates that the second network device agrees to switch the second connection to the second mode.

64. The apparatus according to any one of claims 59 to 63, wherein the processing module is further configured to switch the second connection from the second mode to the first mode when the first connection is restored; or
the processing module is further configured to switch the second connection from the second mode to the first mode when a connection status of the second connection meets a second condition.

65. The apparatus according to claim 64, wherein
the interface module is further configured to send a fourth request message to the second network device, wherein the fourth request message is used to request to switch the second connection to the first mode.

66. The apparatus according to claim 65, wherein the fourth request message comprises a ninth time point, and the ninth time point is a moment, expected by the communication apparatus, at which the second connection is switched to the first mode.

67. The apparatus according to claim 65 or 66, wherein the processing module is further configured to determine a target fourth time-frequency resource from one or more preconfigured fourth time-frequency resources; and
that the interface module sends the fourth request message to the second network device comprises:
the interface module sends the fourth request message to the second network device via the target fourth time-frequency resource.

68. The apparatus according to claim 67, wherein that the processing module determines the target fourth time-frequency resource from the one or more preconfigured fourth time-frequency resources comprises:
the processing module determines the target fourth time-frequency resource from the one or more preconfigured fourth time-frequency resources based on the ninth time point and/or a time required by the second network device to process the fourth request message, wherein the ninth time point is a moment, expected by the communication apparatus, at which the second connection is switched to the first mode.

69. The apparatus according to any one of claims 64 to 68, wherein the interface module is further configured to receive a fourth confirmation message from the second network device, wherein the fourth confirmation message indicates that the second network device agrees to switch the second connection to the first mode.

70. The apparatus according to any one of claims 59 to 63, wherein
the interface module is further configured to send a fourth request message to the second network device, wherein the fourth request message is used to request to switch the second connection to the first mode; and
the processing module is further configured to establish a third connection to a third network device when the communication apparatus receives no response message of the fourth request message within first preset duration, wherein a mode of the third connection is the first mode.

71. The apparatus according to claim 70, wherein
the interface module is further configured to send a fifth request message to the first network device, wherein the fifth request message is used to request to establish the third connection to the third network device.

72. The apparatus according to claim 71, wherein the fifth request message comprises a tenth time point, and the tenth time point is a moment, expected by the communication apparatus, at which establishment of the third connection is completed.

73. The apparatus according to claim 71 or 72, wherein
the processing module is further configured to determine a target fifth time-frequency resource from one or more preconfigured fifth time-frequency resources; and
that the interface module sends the fifth request message to the first network device comprises:
the interface module sends the fifth request message to the first network device via the target fifth time-frequency resource.

74. The apparatus according to claim 73, wherein that the processing module determines the target fifth time-frequency resource from the one or more preconfigured fifth time-frequency resources comprises:
the processing module determines the target fifth time-frequency resource from the one or more preconfigured fifth time-frequency resources based on the tenth time point and/or a time required by the third network device to process the fifth request message, wherein the tenth time point is a moment, expected by the communication apparatus, at which establishment of the third connection is completed.

75. The apparatus according to any one of claims 70 to 74, wherein
the interface module is further configured to receive a fifth confirmation message from the third network device, wherein the fifth confirmation message indicates that the third network device agrees to establish the third connection to the communication apparatus.

76. The apparatus according to any one of claims 59 to 75, wherein the second time information is determined based on an artificial intelligence AI model and/or a sensing network.

77. The apparatus according to claim 76, wherein that the interface module sends the third request message to the second network device comprises:
the interface module sends the third request message to the second network device when accuracy of the AI model and/or the sensing network is greater than or equal to a third preset threshold.

78. The apparatus according to any one of claims 59 to 77, wherein the interruption time of the first connection is a time at which a probability that the first connection is interrupted is greater than or equal to a fourth preset threshold.

79. The apparatus according to any one of claims 59 to 78, wherein a mode of the first connection is the second mode.

80. A connection control apparatus, wherein the apparatus comprises an interface module and a processing module;
the interface module is configured to receive a third request message from a terminal device, wherein the third request message is used to request to switch a second connection established between the terminal device and the communication apparatus from a first mode to a second mode; the third request message comprises second time information; the second time information indicates an interruption time of a first connection established between the terminal device and the first network device; and power at which the terminal device works in the second mode is higher than power at which the terminal device works in the first mode;
the processing module is configured to switch the second connection from the first mode to the second mode; and
the interface module is further configured to transmit data through the second connection.

81. The apparatus according to claim 80, wherein
the interface module is further configured to send a third confirmation message to the terminal device, wherein the third confirmation message indicates that the second network device agrees to switch the second connection to the second mode.

82. The apparatus according to claim 81, wherein the third request message further comprises an eighth time point, and the eighth time point is a moment, expected by the terminal device, at which the second connection is switched to the second mode; and
that the interface module sends the third confirmation message to the terminal device comprises:
the interface module sends the third confirmation message to the terminal device at an eleventh time point, wherein the eleventh time point is determined based on the eighth time point.

83. The apparatus according to any one of claims 80 to 82, wherein
the processing module is further configured to switch the second connection from the second mode to the first mode.

84. The apparatus according to claim 83, wherein
the interface module is further configured to receive a fourth request message from the terminal device, wherein the fourth request message is used to request to switch the second connection to the first mode.

85. The apparatus according to claim 84, wherein the fourth request message comprises a ninth time point, and the ninth time point is a moment, expected by the terminal device, at which the second connection is switched to the first mode; and
that the processing module switches the second connection from the second mode to the first mode comprises:
the processing module switches the second connection from the second mode to the first mode at a twelfth time point, wherein the twelfth time point is determined based on the ninth time point.

86. The apparatus according to claim 83 or 84, wherein that the processing module switches the second connection from the second mode to the first mode comprises:
the processing module switches the second connection from the second mode to the first mode at a thirteenth time point, wherein the thirteenth time point is determined based on the interruption time of the first connection.

87. The apparatus according to any one of claims 83 to 86, wherein
the interface module is further configured to send a fourth confirmation message to the terminal device, wherein the fourth confirmation message indicates that the second network device agrees to switch the second connection to the first mode.

88. The apparatus according to any one of claims 80 to 87, wherein the second time information is determined based on an artificial intelligence AI model and/or a sensing network.

89. The apparatus according to any one of claims 80 to 88, wherein the interruption time of the first connection is a time at which a probability that the first connection is interrupted is greater than or equal to a fourth preset threshold.

90. The apparatus according to any one of claims 80 to 89, wherein a mode of the first connection is the second mode.

91. A communication apparatus, comprising a module or a unit configured to implement the method according to any one of claims 1 to 9, or a module or a unit configured to implement the method according to any one of claims 10 to 17, or a module or a unit configured to implement the method according to any one of claims 18 to 26, or a module or a unit configured to implement the method according to any one of claims 27 to 47, or a module or a unit configured to implement the method according to any one of claims 48 to 58.

92. A communication apparatus, wherein the communication apparatus comprises a processor, and the processor is configured to execute instructions stored in a memory; when the instructions are run by the processor, the communication apparatus is enabled to perform the method according to any one of claims 1 to 9, or the communication apparatus is enabled to implement the method according to any one of claims 10 to 17, or the communication apparatus is enabled to implement the method according to any one of claims 18 to 26, or the communication apparatus is enabled to implement the method according to any one of claims 27 to 47, or the communication apparatus is enabled to implement the method according to any one of claims 48 to 58.

93. A computer-readable storage medium, wherein a computer program is stored in the computer-readable storage medium, and when the computer program is executed by a computer, the method according to any one of claims 1 to 9 is performed, or the method according to any one of claims 10 to 17 is performed, or the method according to any one of claims 18 to 26 is performed, or the method according to any one of claims 27 to 47 is performed, or the method according to any one of claims 48 to 58 is performed.

94. A computer program product, wherein the computer program product comprises instructions, and when the instructions are executed by a computer, the method according to any one of claims 1 to 9 is performed, or the method according to any one of claims 10 to 17 is performed, or the method according to any one of claims 18 to 26 is performed, or the method according to any one of claims 27 to 47 is performed, or the method according to any one of claims 48 to 58 is performed.

95. A communication system, wherein the communication system comprises a terminal device, a first network device, and a second network device; the terminal device is configured to perform the method according to any one of claims 1 to 9; the first network device is configured to perform the method according to any one of claims 10 to 17; and the second network device is configured to perform the method according to any one of claims 18 to 26.

96. A communication system, wherein the communication system comprises a terminal device and a second network device; the terminal device is configured to perform the method according to any one of claims 27 to 47; and the second network device is configured to perform the method according to any one of claims 48 to 58.
